# FASCICULE DE BREVET EUROPEEN

(11) **EP 2 633 214 B1**
(45) Date de publication et mention de la délivrance du brevet: **03.05.2017**
(21) Numéro de dépôt: 11773767.6
(22) Date de dépôt: 26.09.2011
(51) Int. Cl.: B63B 35/03, B63B 35/04, F16L 1/12, F16L 1/16, F16L 1/20

(54) **NAVIRE DONT LE PONT COMPORTE UNE CAVITÉ INTÉGRANT UN PLATEAU TOURNANT.**
SCHIFF MIT EINER BRÜCKE MIT EINER VERTIEFUNG MIT EINGEBAUTEM DREHTELLER
SHIP HAVING A BRIDGE COMPRISING A CAVITY WITH A BUILT-IN ROTARY PLATE

(30) Priorité: 19.11.2010 FR 1059509; 25.10.2010 FR 1058734
(43) Date de publication de la demande: 04.09.2013
(73) Titulaire: SAIPEM S.A., 78180 Montigny-le-Bretonneux (FR)
(72) Inventeur: PIONETTI, François-Régis, F-50450 La Baleine (FR); ROCHER, Xavier, F-78400 Chatou (FR)
(74) Mandataire: Domange, Maxime
(86) Numéro de dépôt international: PCT/FR2011/052224
(87) Numéro de publication internationale: WO 2012/056132

(56) Documents cités:
- WO-A2-2004/068012

## Description

La présente invention concerne un navire avec un équipement de chargement, de transport et de pose de conduites souples, telles des conduites flexibles ou des ombilicaux de commande comportant des câbles électriques, disposés à bord de support flottants en vue d'être installés en mer.

Le secteur technique de l'invention est plus particulièrement le domaine l'installation de conduites reposant sur le fond de la mer notamment comprenant des colonnes montantes incluant des conduites flexibles pour l'extraction sous-marine de pétrole, de gaz ou autre matériau soluble ou fusible ou d'une suspension de matière minérale à partir de tête de puits immergé jusqu'à un support flottant, pour le développement de champs de production installés en pleine mer au large des côtes. L'application principale et immédiate de l'invention est dans le domaine de la production pétrolière en mer.

Les conduites flexibles utilisées pour servir de lignes de production ou de services destinées à l'acheminement des hydrocarbures liquides ou respectivement gazeux présentent une résistance mécanique élevée en particulier à la pression interne, à la traction et à l'écrasement, et sont habituellement posées au moyen de treuils ou de dispositifs de traction tels que des tensionneurs à chenilles comportant des chenilles munies de patins qui enserrent la conduite et se déplacent en translation de manière continue pour l'entraîner conjointement, ou encore en combinant ces deux moyens.

Les efforts de traction appliqués par ces dispositifs tensionneurs à chenilles sur une conduite flexible peuvent être considérables lors de la pose à grande profondeur, et les forces de compression exercées par les patins sur la conduite doivent être suffisamment élevées pour éviter tout glissement relatif entre les patins et la conduite.

Un ombilical de commande comporte une ou plusieurs conduites hydrauliques et/ou des câbles électriques pour la transmission d'énergie et/ou d'informations.

Les conduites connues sous la dénomination « conduite flexible » sont bien connues de l'homme de l'art et ont été décrites dans les documents normatifs publiés par l'American Petroleum Institute (API), plus particulièrement sous les références API 17J et API RP 17 B. De tels flexibles sont notamment fabriqués et commercialisés par la Société COFLEXIP France.

Ces conduites flexibles comportent en général des couches d'étanchéité internes en matériaux thermoplastiques associées à des couches résistantes à la pression interne à la conduite, en général en acier ou en matériaux composites. De telles conduites flexibles sont constituées plus particulièrement d'assemblage de couches de matériaux thermoplastiques tubulaires et de couches résistantes en acier ou matériaux composites réalisés sous forme de bandes spiralées, jointives à l'intérieur de la conduite thermoplastique pour résister à la pression interne d'éclatement et complétés par des armatures externes au-dessus de la couche tubulaire thermoplastique également sous forme de bandes spiralées jointives, mais avec un pas plus long, c'est-à-dire un angle d'inclinaison de l'hélice inférieur, notamment de 15° à 55°.

Dans la présente description, on entend plus généralement par « conduite souple sous-marine », un câble, un ombilical ou une conduite capable d'accepter des déformations importantes sans engendrer des efforts de rappel significatifs, notamment une conduite flexible.

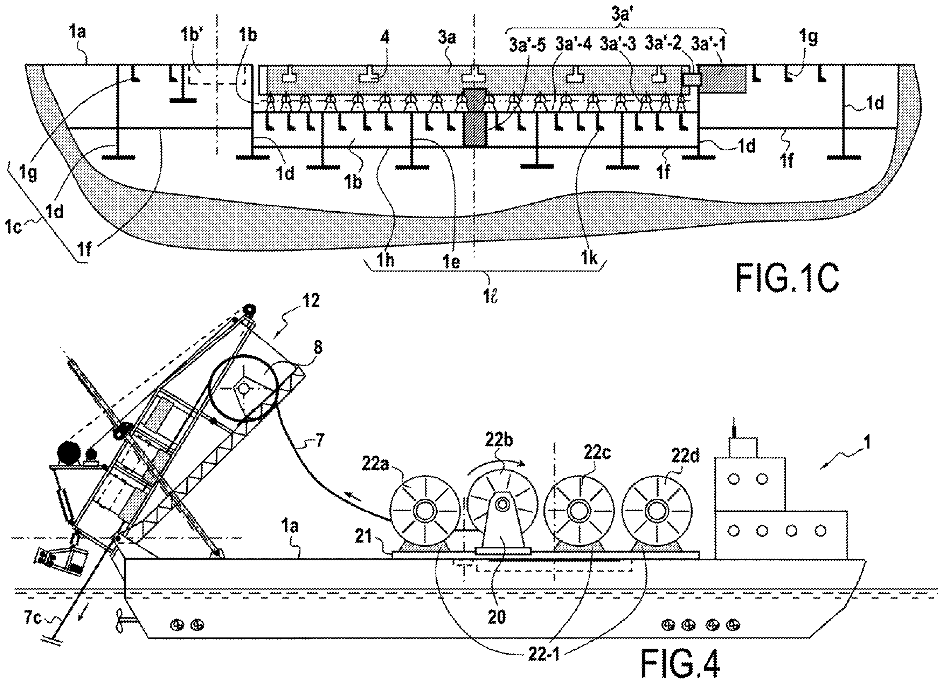

Dans la technique antérieure, les navires de pose en mer de conduites souples sont équipés de dispositifs de stockage et de manutention desdites conduites tel que décrit ci-après en référence à la figure 4. Le plus classiquement, une série de treuils ou bobines à axe horizontal sur lequel sont enroulés des portions de conduite sont disposés côte à côte dans la direction longitudinale du navire. Les différentes portions de conduite sont donc enroulées sur une pluralité de treuils équipés d'un fût horizontal entre deux flasques latéraux verticaux. Dans ce type de réalisation de la technique antérieure, le fût horizontal doit présenter une rigidité en flexion du fait que le poids de la conduite enroulée est entièrement repris par le fût.

D'autre part, le poids de la conduite et du treuil incluant ces flasques latéraux verticaux est entièrement transmis à la motorisation de la bobine. Il en résulte que les treuils ont nécessairement une taille de flasque et une capacité de longueur de conduite enroulable limitée, ceci d'autant plus que le diamètre de la conduite est plus important.

Dans le cas de conduites flexibles de grand diamètre, ce stockage conventionnel sur treuils selon la figure 4 est souvent impossible, car le rayon de courbure minimal de ladite conduite flexible est très grand, notamment jusqu'à 5m voire plus, ce qui nécessiterait des bobines de très grande taille que l'on ne saurait alors plus manipuler.

Ainsi, en pratique, le diamètre des flasques ne dépasse pas 5 à 10 m pour un poids de bobine de 400 à 500 tonnes correspondant à des longueurs de portions de conduites inférieures à 10 km, en pratique de 1 à 10 km pour des diamètres de conduite de 50 à 300 mm, c'est pourquoi, il est nécessaire pour poser des conduites de grande longueur et/ou de grand diamètre de mettre en oeuvre un grand nombre de treuils ainsi disposés côte à côte. Enfin, les connections des différentes portions de conduites entre elles pour constituer la conduite complète de liaison fond-surface, représentent des opérations de manutention relativement délicates et longues à réaliser requérant des immobilisations du navire de pose sur une grande durée et donc coûteuse.

On connaît également des dispositifs de stockage et de manutention de conduites souples impliquant la mise en oeuvre de dispositifs d'enroulement de type « treuil » avec un fût vertical sur lequel est enroulé la conduite, ce type de dispositif étant soit posé par-dessus le pont du navire, soit installé à l'intérieur du navire, en général à fond de cale. Toutefois, dans ce cas, du fait que le flasque inférieur du treuil est disposé horizontalement par-dessus le pont du navire, ce flasque reçoit toute la charge et doit être supporté par un dispositif de support et de rotation qui doit présenter une rigidité extrême pour résister à lui seul aux efforts de compression, mais aussi de flexion et/ou torsion, car le flasque constituant un plateau tournant doit être maintenu bien plan pour que la rotation selon l'axe vertical du treuil puisse être opérée de manière stable et précise ; mais aussi pour que ledit treuil puisse être déplacé après utilisation pour libérer le pont du navire pour d'autres opérations.

L'installation de tels équipements est délicate car elle nécessite des moyens de levage puissants, car la structure porteuse du plateau tournant ainsi que ledit plateau pèsent de 250 tonnes à 750 tonnes, voire plus dans les cas extrêmes. Ainsi l'installation ou la démobilisation de tels équipements ne peut se faire qu'en zone abritée, en général dans un port, et immobilise le navire pendant 4-5 jours, voire plusieurs semaines.

Dans WO 2004/068012, on décrit des dispositifs de stockage de conduites par enroulement de conduites comprenant un plateau circulaire tournant monté par-dessus une surface inférieure de support située au-dessus du pont du navire sur lequel ledit dispositif de stockage de conduites est embarqué.

Dans WO 2004/068012, le dispositif de stockage de conduites fonctionne par enroulement en mode mixte carrousel/panier tournant, décrit figure 4B, dans lequel on enroule en « mode panier » (au sens de la définition donnée au paragraphe (e) ci-après d'un dispositif de stockage selon l'invention) un ombilical 10422 de petit diamètre contre le fût central du dispositif de stockage, tandis qu'une conduite 1044 de plus grand diamètre est enroulée en « mode carrousel » (au sens de la définition donnée au paragraphe (b) ci-après de la définition du dispositif de stockage modulaire de la présente invention) à l'extérieur des poteaux ou moyens de retenu du dispositif de stockage.

Ainsi, compte tenu du fait que la conduite 10422 est enroulée en mode panier, le fût central n'est pas recouvert d'un flasque de diamètre supérieur à celui du fût. Mais, l'ouverture supérieure entre le fût central et les moyens périphériques 10406 de retenu de la conduite 10422, est libre.

En revanche, un flasque supérieur 10408 est ajouté au sommet des éléments de support d'enroulement 10406 à l'extérieur desquels et contre lesquels est enroulé la conduite 10044 en mode carrousel.

Dans le document WO 2004/068012, par nécessité, l'ombilical ou la conduite enroulé en mode panier autour du fût central doit autoriser un plus petit rayon de courbure minimale et donc présenter un relativement plus petit diamètre.

Le mode de réalisation du dispositif de stockage mixte selon WO 2004/068012 présente l'inconvénient de nécessiter un fût central de plus grand diamètre, lorsque les conduites stockées en mode panier sont de diamètre important, ce qui rend inutilisable la zone de stockage située entre ledit fût et l'axe du panier, la capacité globale de stockage s'en trouvant ainsi radicalement réduite par rapport au mode de stockage selon la présente invention. En outre, il est plus difficile de mettre en oeuvre un enroulement en mode panier avec des conduites ou ombilicaux de plus petits diamètres car l'enroulement ne se fait pas sous tension et demande un contrôle plus précis et donc plus difficile à réaliser pour la formation des spires concentriques reposant sur un même plan, et ce d'autant plus que le diamètre de la conduite et le diamètre des spires sont plus petits.

EP 1 118 572 confirme l'analyse développée ci-dessus quant à la difficulté d'enrouler en mode panier une couche multi-spires comportant une pluralité de spires concentriques reposant sur un même plan, pour une conduite de petit diamètre, comme cela est requis en mode panier.

Dans WO 2004/068012, EP 1 118 572 et WO 2009/129223 qui décrivent des dispositifs de stockage de conduites par enroulement sur un navire de pose en mer comportant un plateau tournant ou flasque inférieur, ledit plateau tournant ou flasque inférieur du dispositif étant situé par-dessus le pont du navire.

Le but de la présente invention est de fournir un nouveau dispositif amélioré de stockage et de maintien de conduite souple sur le pont d'un navire de transport et pose en mer de telles conduites.

Plus particulièrement, le but de l'invention est de fournir un dispositif de stockage et de manutention de conduites souples à bord de navires de pose qui permette de réaliser les opérations de pose en mer de dites conduites souples plus longues et ce plus facilement et plus rapidement ; et plus particulièrement encore qui permette de libérer le pont du navire plus facilement et plus rapidement une fois les opérations de pose de la conduite achevées et de réinstaller le dispositif en tant que de besoin pour une nouvelle pose de conduite, le plus facilement et le plus rapidement possible et ce avec des moyens de manutention relativement réduits, autorisant ainsi le cas échéant des manutentions effectuées sur site.

Pour ce faire, la présente invention fournit un navire de pose en mer de conduites sous marines souples comprenant un pont comprenant une cavité dans laquelle sont disposés ledit plateau circulaire tournant et un dispositif de support et de de rotation motorisée du plateau tournant, la face supérieure dudit plateau tournant ne dépassant sensiblement pas le niveau de la partie du pont qui lui est immédiatement juxtaposée (ou adjacente) latéralement, de préférence la périphérie dudit plateau tournant arrivant sensiblement au niveau dudit pont, ledit plateau tournant étant supporté par et coopérant en rotation avec des éléments du dispositif de support de rotation fixés à la structure porteuse de la coque du navire au sein de ladite cavité, ledit plateau tournant présentant des éléments d'accrochage sur sa face supérieure, aptes à permettre l'accrochage de manière réversible des accessoires d'un dispositif de stockage et manutention modulaire de conduite(s) souple(s) par enroulement et déroulement de(s)dite(s) conduite(s) souple(s), lesdits accessoires comprenant au moins des supports d'enroulement s'étendant dans une direction ZZ' perpendiculaire et au dessus dudit plan du pont du navire, de préférence disposés circulairement et symétriquement par rapport à l'axe central de rotation Z₁Z₁' dudit plateau tournant, lesdits éléments d'accrochage desdits supports d'enroulement étant de préférence répartis régulièrement sur la face supérieure dudit plateau tournant, de préférence encore circulairement et symétriquement répartis et à différentes distances par rapport à l'axe central vertical Z₁Z₁' de rotation dudit plateau tournant.

On comprend que chaque partie de la face supérieure dudit plateau tournant ne dépasse sensiblement pas le niveau de la partie du plan du pont qui lui est juxtaposée, c'est-à-dire la plus proche, dans une direction perpendiculaire au dit plan au niveau de ladite partie de plan.

On entend ici par « structure porteuse de la coque du navire », la structure aussi appelée communément « poutre-navire » (en anglais « hull girder »), dont le rôle est de supporter le navire proprement dit et son chargement tant sur le pont que dans ses cales lorsque la coque est soumise à la poussée d'Archimède. La poutre-navire comporte, de manière connue de l'homme de l'art, des éléments de structure transversaux principaux appelés « couples » (en anglais « frames ») et des éléments de structure transversaux et longitudinaux secondaires appelés « menbrures » ou « plats à boudin » (en anglais « bulb profiles ») ainsi que des éléments de structure longitudinaux en forme de poutre (en anglais « primary beams »), dont la partie supérieure desdits éléments de structure supporte le pont du navire.

On entend donc ici par « pont du navire », la paroi supérieure de la « poutre-navire », cette paroi supérieure est une tôle de forte épaisseur (en anglais « deckl plate »). Elle est en général continue depuis l'arrière du navire, jusqu'à l'avant du navire et vers les côtés, depuis bâbord jusqu'à tribord. Cette paroi supérieure est sensiblement horizontale ou éventuellement légèrement incliné depuis et de part et d'autre de l'axe longitudinal médian du pont vers les bordés respectifs. Le pont est donc constitué, en partie courante, de tôles de forte épaisseur solidaires desdits éléments de structure transversaux de type couples et menbrures et de dits éléments de structure longitudinaux situés en sous-face de ladite tôle de pont.

On comprend que selon la présente invention, le navire comporte une poutre-navire configurée lors de sa construction pour créer une dite cavité apte à recevoir et supporter ledit plateau tournant et son dispositif de support et de rotation ainsi que la charge dudit plateau, notamment ledit dispositif de stockage et manutention de conduites souples et la ou les conduites stockées sur ledit plateau tournant.

Un premier avantage de l'invention porte sur le principe de plateau tournant intégré dans une cavité du pont, donc ne nécessitant pas de démontage dudit plateau tournant, celui-ci pouvant y être laissé de manière permanente. Ceci représente un gain de temps considérable. En effet, du fait que ledit plateau tournant ne dépasse pas sensiblement au-dessus du plan du pont d'une part, et d'autre part, comporte des moyens d'accrochage réversibles d'un dit dispositif de stockage et manutention modulaire, il est possible de monter et démonter ledit dispositif modulaire selon l'invention beaucoup plus facilement et plus rapidement que les dispositifs de stockage et manutention de conduite souple de la technique antérieure, et ce avec des moyens de levage et de manutention très limités, ce qui permet dans certains cas d'effectuer ce type d'opération directement sur site, sans avoir à revenir au port.

Ainsi, grâce au dispositif selon l'invention, l'essentiel du poids de l'équipement, c'est-à-dire le plateau tournant et sa motorisation restent à demeure, car ils sont intégrés de manière permanente au niveau de la cavité du pont du navire et ne nécessitent une manutention lourde qu'à l'occasion de la construction dudit navire ou qu'à l'intégration dudit plateau et dispositif de support et de rotation au sein de la cavité du pont du navire. De même, la structure rigide de support du plateau tournant existant dans l'art antérieur est remplacée par la structure porteuse propre du navire, le cas échéant localement renforcée, et donc reste intégrée de manière permanente au navire dans le dispositif selon l'invention et ne nécessite donc des manutentions lourdes qu'à l'occasion de la construction dudit navire ou qu'à l'intégration dudit plateau et dispositif de support et de rotation au sein de la cavité du pont du navire, les plateau tournant et structure rigide support existant dans l'art antérieur pouvant représenter un poids global de 150 à 750 tonnes voire plus.

Il résulte aussi de cette intégration permanente du plateau tournant et de son dispositif de rotation au sein de ladite cavité, que la rigidité nécessaire dudit plateau est relativement réduite, car ledit plateau ne doit transférer que les seuls efforts résultant de la charge qu'il supporte sans avoir à reprendre en outre des éventuels efforts répétés de torsion et/ou de flexion comme cela serait requis si ledit plateau devait pouvoir être manutentionné pour être déplacé avec son dispositif de support et rotation après chaque utilisation comme dans la technique antérieure.

Plus particulièrement, la structure porteuse dudit plateau tournant comprend un plancher intégré à la poutre-navire et formant partie intégrante de ladite poutre-navire, consistant en un décrochement vers le bas d'une portion sensiblement circulaire du pont, ledit plancher constituant la paroi supérieure de la poutre-navire au sein de ladite cavité et jouant un rôle similaire à celui de la tôle de pont en terme de résistance de ladite poutre-navire.

De préférence, ledit plancher est solidaire d'éléments de renfort supplémentaires au sein de la cavité faisant partie intégrante de la poutre-navire configurée de sorte que la poutre-navire puisse assurer le transfert de la charge constituée par ledit plateau tournant, ledit dispositif de support et de rotation et son chargement, et fournir la rigidité requise pour le supportage dudit plateau tournant et son chargement.

Dans un mode particulier de réalisation, ladite structure porteuse de la coque comporte des éléments de renforts supplémentaires au niveau de ladite cavité et ledit dispositif de support de de rotation au sein de ladite cavité comprend au moins :
- un plancher fixé à et supporté par desdits éléments de renfort supplémentaires de ladite structure porteuse de la coque en sous face dudit plancher, et
- des éléments de guidage en rotation, comprenant de préférence des roulettes supportés par ledit plancher, et un arbre de rotation supporté par des éléments de renfort supplémentaires de ladite structure porteuse de la coque en sous face dudit plancher, et
- un moteur et des éléments d'entrainement en rotation du plateau et/ou dudit arbre de rotation par actionnement dudit moteur, supportés par des éléments de structure de ladite structure porteuse de la coque en périphérie de ladite cavité et/ou desdits éléments de renfort supplémentaires e ladite structure porteuse de la coque au niveau de ladite cavité, lesdits éléments d'entrainement en rotation comprenant de préférence des engrenages. Lesdits éléments d'entrainement en rotation peuvent aussi comprendre des galets ou des courroies.

On entend par « éléments de renfort supplémentaires », des éléments de structure additionnels par rapport au reste de la structure porteuse de la coque, aptes à conférer à la structure porteuse de la coque au niveau de la cavité, la capacité reprendre les charges en compression représentées par le plateau et son chargement transférées localement directement à la structure porteuse de la coque du navire au niveau de la cavité, du fait de la fixation directe des éléments de support et de rotation du plateau tournant à la structure porteuse de la coque. Ainsi, il est possible de mettre en oeuvre des dispositifs de stockage et manutention modulaires selon l'invention de grande capacité et donc éventuellement des conduites de grande longueur et/ou de grand diamètre en comparaison avec des dispositifs modulaires supportés par des plateaux tournant rapportés par-dessus le pont du navire dont la poutre-navire n'est pas configurée spécialement avec une cavité et des structures de renforts supplémentaires au sein de la poutre-navire pour supporter le plateau tournant, et ce sans requérir la mise en place sur le pont de structure support de plateau tournant pour reprendre une partie des charges en compression et fournir de la rigidité audit plateau tournant comme c'est le cas dans la technique antérieure.

Plus particulièrement, lesdits élément de renfort supplémentaires de ladite structure porteuse de la coque supportant ledit plancher au sein de ladite cavité comprennent des couples transversaux rabaissés mais rapprochés les uns des autres dans la direction longitudinale du navire et des poutres longitudinales rabaissées mais rapprochées les unes des autres dans la direction transversale du navire.

On entend par « accrochage réversible » que lesdits accessoires peuvent être montés puis démontés pour libérer la place au-dessus dudit plateau tournant.

On comprend que lesdits accessoires sont aptes à former, en coopération avec ledit plateau tournant, un dispositif de stockage et manutention modulaire de conduite(s) souple(s) par enroulement et déroulement de(s)dite(s) conduite(s) souple(s).

On comprend que, du fait que lesdits éléments d'accrochage peuvent être positionnés à différentes distances par rapport à l'axe central vertical Z₁Z₁' de rotation dudit plateau tournant, il est possible de pouvoir y accrocher lesdits support d'enroulement à différentes positions permettant ainsi des enroulements de diamètres variables selon la position desdits supports d'enroulement à la surface du plateau tournant.

Plus particulièrement, lesdits éléments d'accrochage comprennent des rainures et/ou des trous de préférence filetés disposés radialement et/ou circulairement, de préférence régulièrement répartis sur toute la surface du plateau tournant.

Ainsi, il est possible de positionner facilement avec des moyens de manutention très limités, lesdits accessoires de manière à former des supports d'enroulement permettant des enroulements de diamètre variable à la surface du plateau. Lesdites rainures sont de façon connues aptes à coopérer en fixation réversible avec des éléments coopérant avec ou intégré à la partie de structure à la base desdits accessoires et aptes à y coulisser tels que des tasseaux. Lesdits trous étant aptes à coopérer en fixation réversible avec des tiges fixées ou intégrées à la base desdits accessoires.

La présente invention fournit donc un navire de pose supportant un dispositif de stockage et manutention modulaire de conduite souple par enroulement et déroulement de conduite souple comprenant :
a) un dit plateau tournant supportant desdits accessoires sur sa face supérieure qui y sont accrochés de manière réversible aux dits éléments d'accrochage, lesdits accessoires formant ainsi un ou des supports d'enroulement s'étendant dans la direction perpendiculaire ZZ' et au-dessus dudit plan dudit pont du navire, lesdits supports d'enroulement étant disposés circulairement et symétriquement par rapport à l'axe central Z₁Z₁' de rotation dudit plateau tournant, sur la face supérieure dudit plateau tournant, et,
b) un dispositif de trancanage comportant :
   - un dispositif de guidage et de maintien de conduite souple monté sur un deuxième élément de support formant un poteau, une tour ou un portique s'étendant au moins dans une direction perpendiculaire au-dessus du pont du navire à proximité dudit plateau tournant comportant des moyens motorisés de déplacement d'une première portion de conduite souple s'étendant entre ledit dispositif de guidage et de maintien et ledit dispositif de stockage et de manutention apte à permettre le déplacement relatif vertical et/ou horizontal de ladite portion de conduite souple par rapport au dit deuxième élément de support pour permettre le trancanage de ladite conduite souple autour et contre desdits supports d'enroulement.

On comprend que ledit pont comprend à proximité dudit plateau tournant au moins un deuxième élément d'accrochage d'au moins un dit deuxième élément de support.

On entend ici par trancanage, de façon connue, l'action de guider en vue d'enrouler/dérouler ladite conduite disposée en spires jointives :
- soit par déplacement vertical de ladite conduite synchronisé avec la rotation dudit plateau tournant, lesdites spires étant alors juxtaposées les unes au-dessus des autres en superposition,
- soit par déplacement horizontal de ladite conduite, synchronisé avec la rotation dudit plateau tournant, lesdites spires reposant sur un même plan ayant des diamètres d'enroulement continument variables, car disposées en spirales, juxtaposées concentriquement l'une à côté de l'autre.

Dans une première variante de réalisation, le dispositif de stockage et de manutention de conduite souple est du type dénommé carrousel comprenant :
a) un support d'enroulement à paroi continue en forme de fût central cylindrique ou cylindro-tronconique disposé coaxialement au dit plateau tournant, ledit fût étant surmonté d'un flasque circulaire supérieur à son sommet de préférence de même diamètre que ledit plateau tournant, et
b) un dispositif de trancanage apte à permettre le trancanage de ladite conduite souple autour et contre ledit fût central en mode dit carrousel, comprenant un dispositif de traction de la conduite apte à tensionner ladite première portion de conduite s'étendant entre ledit dispositif de traction et la partie de conduite déjà enroulée ou encore enroulée, ledit dispositif de traction étant de préférence un tensionneur à chenilles, et des moyens aptes à déplacer verticalement ladite première portion conduite souple tensionnée de manière à la maintenir au fur et à mesure de son enroulement ou déroulement, sensiblement horizontalement pour permettre le trancanage de la conduite en plusieurs couches coaxiales de spires jointives et son déroulement, ladite conduite souple étant ainsi enroulée ou étant apte à être enroulé en mode dit carrousel, en plusieurs couches telles que les spires d'une même couche soient superposées hélicoïdalement, les différentes couches formant des colonnes cylindriques coaxiales juxtaposées, de préférence en déplaçant verticalement le dispositif de traction.

On comprend que :
- les spires de la première couche sont appliquées contre ledit fût et présentent un diamètre d'enroulement le plus petit, et les spires de la deuxième couche appliquées contre celles de la première couche présentent un diamètre d'enroulement plus grand, les couches cylindriques suivantes appliquées successivement contre les couches précédentes et présentent un diamètre d'enroulement croissant, de sorte que deux spires de deux couches juxtaposées présentent des diamètres d'enroulement différents, et
- la première couche est formée de préférence par trancanage montant de la conduite pour superposer successivement les unes au dessus des autres les spires depuis ledit plateau tournant sur laquelle repose la première spire du bas jusqu'à un flasque supérieur contre lequel vient buter la face supérieure de la dernière spire du haut, tandis que la deuxième couche est réalisée par trancanage descendant depuis la sous-face du flasque supérieur jusqu'à atteindre le plateau tournant. Ceci explique pourquoi il est requis de maintenir en tension la portion de conduite entre le dispositif de maintien et de guidage et la partie de conduite déjà ou encore enroulée sur le support d'enroulement à défaut de quoi, non seulement la conduite ne pourrait pas rester enroulée de manière stable, mais en outre, il ne serait pas possible de réaliser l'enroulement en trancanage descendant.

Pour ce mode d'enroulement en mode carrousel on met en oeuvre un support d'enroulement à paroi de préférence continue en forme de fût central cylindrique ou cylindro-tronconique car la conduite devant être trancanée sous tension, elle risquerait - si on mettait en oeuvre une pluralité de support d'enroulement du type poteaux répartis régulièrement en cercle - de connaître des courbures excessives notamment inférieure à son rayon de courbure minimale au niveau des points de contact avec lesdits poteaux, risquant ainsi d'endommager la structure interne desdites conduites souples.

Plus particulièrement, pour cet enroulement en mode carrousel, la conduite peut être enroulée en k = 2 à 100 couches coaxiales, chaque couche comprenant l = 2 à 100 spires, de préférence 5 à 10 spires superposées hélicoïdalement.

Dans une deuxième variante de réalisation, le dispositif de stockage et de manutention de conduite souple est du type dénommé panier tournant, comprenant :
a) une pluralité de supports d'enroulement en forme de poteaux internes disposés circulairement et de préférence symétriquement par à l'axe central de rotation Z₁Z₁' dudit plateau tournant ou un fût central cylindrique ou cylindro-tronconique disposé coaxialement audit plateau tournant, et des éléments de retenue périphériques s'étendant dans la direction perpendiculaire ZZ' au dessus dudit pont du navire, disposés circulairement et de préférence symétriquement par rapport à l'axe central Z₁Z₁' de rotation dudit plateau tournant, sur la face supérieure dudit plateau tournant, et de préférence encore, répartis régulièrement en périphérie dudit plateau tournant,
b) un dispositif de trancanage apte à permettre le trancanage de ladite conduite souple autour et contre ledit fût central ou ladite pluralité de poteaux internes en mode dit panier tournant, comprenant un dispositif de maintien et de guidage de la conduite, de préférence un tensionneur à chenilles, et des moyens aptes à déplacer en translation horizontale dans une direction transversale perpendiculaire YY' au dit axe central vertical de rotation Z₁Z₁', la première portion de conduite souple s'étendant en position inclinée, notamment incurvée, entre ledit dispositif de maintien et de guidage et la conduite déjà enroulée ou encore enroulée, de préférence en déplaçant horizontalement ledit dispositif de traction, pour permettre le trancanage de la conduite en plusieurs couches superposées de spires jointives et son déroulement, la conduite souple étant ainsi enroulée ou apte à être enroulée en mode dit du type panier tournant, sur plusieurs couches superposées telles que les spires d'une même couche soient juxtaposées concentriquement reposant sur un même plan et de diamètres croissants depuis la première spire appliquée contre le ou les supports d'enroulement jusqu'à la dernière spire venant buter contre lesdits poteaux périphériques, ladite portion de conduite s'étendant entre le dispositif de maintien et de guidage et la conduite déjà enroulée ou encore enroulée, n'étant pas tensionnée par ledit dispositif de maintien et de guidage celui-ci étant maintenu à hauteur constante au dessus des extrémités supérieures desdits supports d'enroulement et poteaux de retenue.

On comprend que :
- la première couche est formée par dépose de celle-ci sur le plateau tournant et éloignement progressif de ladite portion de conduite par rapport au fût central (ou poteaux internes de support d'enroulement) depuis la première spire juxtaposée au fût central jusqu'à la dernière spire à la périphérie du plateau tournant (« sens aller »), puis,
- la deuxième couche est formée par dépose de la deuxième couche par dessus la première couche en déplaçant en sens inverse (« sens retour ») ladite portion de conduite, c'est-à-dire en rapprochant la conduite du fût central, et

- ainsi de suite en sens aller et sens retour de déplacement de la première portion de conduite non encore enroulée pour les couches suivantes, (ou poteaux internes de support d'enroulement) depuis la première spire périphérique superposée à la dernière spire de la couche précédente où elle est stabilisée par retenue grâce auxdits dits poteaux périphériques de retenue jusque vers ledit fût central et ainsi de suite en sens inverse de déplacement de la portion de conduite non encore enroulée pour la couche suivante ; lesdits déplacements de ladite portion de conduite en éloignement (« sens aller ») puis en rapprochement (« sens retour ») par rapport au fût central à des fins de trancanage étant synchronisés avec la rotation du plateau tournant.

De préférence, dans le mode de réalisation dit de type « panier tournant », lesdits poteaux internes formant lesdits éléments de support d'enroulement et lesdits poteaux périphériques de retenue, sont solidarisés entre eux, notamment par une virole circulaire à leurs sommets. D'autre part, dans ce mode de réalisation de type « panier tournant », l'espace entre lesdits éléments de retenue et le fût central ou lesdits éléments de support d'enroulement ne comporte pas de flasque supérieur pouvant obstruer le passage, ce qui empêcherait le bon enroulement/déroulement de ladite première portion de conduite non tensionnée contre lesdits éléments de support, dans la mesure où ladite première portion de conduite n'est pas disposée horizontalement, mais est inclinée depuis le dispositif de maintien et de guidage vers lesdits éléments de support d'enroulement situés au-dessous dudit fût central, et dans la mesure où ladite première portion de conduite doit pouvoir être déplacée en translation horizontale dans cet espace.

On entend dans la présente description par « disposés circulairement », que lesdits éléments sont disposés le long d'un cercle et notamment s'agissant de poteaux, les bases et les sommets desdits poteaux sont disposés le long d'un cercle.

Plus particulièrement en mode panier, une conduite sera enroulée sur m = 2 à 100 couches superposées, chaque couche étant p = 1 à 50 spires, de préférence 5 à 20 spires jointives coaxiales.

Dans une troisième variante préférée de réalisation selon l'invention, le dispositif de stockage et manutention de conduite souple est du type mixte carrousel/panier tournant apte à stocker et manutentionner deux conduites souples comprenant :
- un premier support d'enroulement d'une première conduite, ledit premier support d'enroulement étant à paroi continue en forme de fût central cylindrique ou cylindro-tronconique disposé coaxialement audit plateau tournant,
- une pluralité de deuxièmes supports d'enroulement d'une deuxième conduite en forme de poteaux internes disposés circulairement et de préférence symétriquement par à l'axe central de rotation Z₁Z₁' dudit plateau à distance radiale constante dudit fût central, et, de préférence encore répartis régulièrement en le long de leur dite ligne circulaire de positionnement sur ledit plateau tournant,
- des éléments de retenue périphériques en forme de poteaux s'étendant dans la direction perpendiculaire ZZ' au dessus dudit plan dudit pont navire, disposés circulairement et de préférence symétriquement par rapport à l'axe central Z₁Z₁' de rotation dudit plateau tournant, et de préférence encore répartis régulièrement en périphérie dudit plateau tournant,
- ledit fût central étant surmonté d'un flasque circulaire supérieur à son sommet de diamètre tel que lesdits poteaux internes d'enroulement de la deuxième conduite sont solidarisés entre eux à leurs sommets par fixation sur la périphérie dudit flasque supérieure, lesdits premier et deuxième éléments de support et dits éléments de retenue étant disposés sur la face supérieure dudit plateau tournant, et
- un dispositif de trancanage comprenant au moins un deuxième élément de support d'au moins un dispositif de guidage et maintien de conduite souple apte à permettre le déplacement vertical et/ou horizontal d'une dite première portion de conduite souple s'étendant entre le dispositif de guidage et de maintien et la conduite déjà ou encore enroulée pour le trancanage de ladite conduite souple autour et contre desdits supports d'enroulement, ledit deuxième élément de support formant une tour ou un portique s'étendant au moins dans une direction perpendiculaire au plan ZZ' au plan dudit et au dessus dudit pont, à proximité dudit plateau tournant,
- un dit dispositif de guidage et maintien de conduite souple étant apte à permettre le trancanage d'une première conduite souple autour et contre ledit fût central en mode dit carrousel, comprenant un dispositif de traction de la conduite apte à tensionner la portion de première conduite s'étendant entre le dispositif de traction et la première conduite déjà enroulée ou encore enroulée, ledit dispositif de traction étant de préférence un tensionneur à chenilles, et des moyens apte à déplacer verticalement ladite première portion de première conduite souple s'étendant entre le dispositif de traction et la première conduite déjà enroulée ou encore enroulée, pour que celle-ci puisse être tensionnée et maintenue sensiblement horizontalement par ledit dispositif de traction pour permettre le trancanage de la première conduite en plusieurs couches coaxiales de spires jointives superposées, ladite première conduite souple étant ainsi enroulée ou apte à être enroulée en plusieurs couches coaxiales telles que les spires d'une même couche sont superposées hélicoïdalement, les différentes couches formant des colonnes cylindriques coaxiales juxtaposées de sorte que deux spires de deux couches juxtaposées présentent des diamètres différents, et
- un dit dispositif de guidage et maintien de conduite souple étant en outre apte à permettre le trancanage d'une deuxième conduite souple autour et contre lesdits supports d'enroulement en forme de poteaux internes en mode dit de type panier tournant, comprenant un dispositif de maintien et de guidage de la conduite, de préférence un tensionneur à chenilles, et des moyens apte à déplacer en translation horizontale dans une direction transversale perpendiculaire YY' au dit axe central de rotation Z₁Z₁', ladite première portion de deuxième conduite souple s'étendant en position inclinée, notamment incurvée, entre le dispositif de maintien et de guidage et la deuxième conduite déjà enroulée ou encore enroulée, pour permettre le trancanage de ladite deuxième conduite en plusieurs couches planes superposées de spires jointives, ladite deuxième conduite souple étant ainsi enroulée ou apte à être enroulée sur plusieurs couches superposées telles que les spires d'une même couche soient juxtaposées concentriquement reposant sur un même plan et de diamètres croissants depuis la première spire appliquée contre lesdits supports d'enroulement en forme de poteaux internes jusqu'à la dernière spire venant buter contre lesdits poteaux périphériques de retenue, ladite première portion de deuxième conduite n'étant pas tensionnée par ledit dispositif de maintien et de guidage celui-ci étant maintenue à hauteur constante au dessus de desdits supports d'enroulement et poteaux de retenue.

On comprend que ladite première portion de deuxième conduite est ainsi inclinée et incurvée entre ledit dispositif de maintien et de guidage et la deuxième conduite déjà enroulée ou encore enroulée, et passe dans l'espace libre entre lesdits éléments de retenue et lesdits éléments de support, ledit espace n'étant pas obstrué par un flasque supérieur.

Pour le mode d'enroulement en mode panier tournant de la deuxième conduite, la mise en oeuvre d'une pluralité de poteaux à titre de supports d'enroulement représente un risque moindre de courbure excessive de la deuxième conduite, car la conduite flexible n'est pas sous tension.

Plus particulièrement, dans cette troisième variante de réalisation, le dispositif de stockage et de manutention comprend un seul dispositif de guidage et maintien de conduite apte à être déplacé verticalement ou horizontalement à hauteur constante en déplacement relatif par rapport à un deuxième élément de support dudit dispositif de guidage et maintien de conduite souple, ledit deuxième élément support comprenant un portique.

Ce mode de réalisation est le mode préféré de réalisation du dispositif de stockage et manutention de conduite souple car il permet d'éviter la mise en oeuvre de deux équipements distincts ou un même équipement requérant des transformations importantes et difficilement réalisables sur site, en mer ouverte, pour passer d'un enroulement en mode carrousel à un enroulement en mode panier tournant, évitant ainsi des immobilisations du navire au port couteuses.

Le mode de réalisation dénommé de type « mixte » est en outre préféré, car il permet de mettre en oeuvre de façon optimale deux conduites souples de différents diamètres.

Les conduites flexibles de relativement plus petit diamètre se mettent plus facilement en enroulement en spires superposées selon le mode carrousel, car il est plus difficile de disposer des spires jointives de diamètres de spires croissants concentriques dans un plan selon le mode de panier tournant pour des conduites de petit diamètre.

En outre, des conduites flexibles de relativement plus petit diamètre ont un rayon de courbure minimal également relativement plus petit, qui permettent donc un enroulement sur un fût central de relativement plus petit diamètre, ce qui augmente d'autant la capacité maximale de stockage en mode carrousel en termes de longueur de conduite flexible stockée.

De préférence encore, dans ledit troisième mode de réalisation de dispositif de stockage et de manutention selon l'invention, deux conduites souples sont enroulées sur le dispositif de stockage et manutention mixte comprenant :
- une dite première conduite, de préférence une première conduite flexible, de plus petit diamètre enroulée sur un dit fût central en mode carrousel, et
- une deuxième conduite souple, de préférence une deuxième conduite flexible, de plus grands diamètres enroulés en mode panier tournant autour desdits poteaux internes.

Avantageusement, ledit plateau tournant est constitué de deux parties concentriques comprenant :
- un premier plateau tournant interne en forme de disque apte à être entraîné en rotation, et
- un deuxième plateau tournant externe de forme annulaire concentrique au dit premier plateau tournant et disposé autour dudit premier plateau tournant, ledit deuxième plateau tournant étant apte à être maintenu immobilisé ou entraîné en rotation concomitamment au dit premier plateau tournant, lorsque ledit premier plateau tournant est entraîné en rotation.

Ce mode de réalisation est avantageux en ce qu'il permet de libérer une surface de pont de dimensions variables selon les capacités de stockage du dispositif de stockage mises en oeuvre.

Ainsi, ledit premier plateau tournant interne pourra être utilisé en mode carrousel, en mode panier et en mode mixte, auxquels cas le deuxième plateau tournant externe soit ne comprendra aucun poteau si le premier plateau tournant est utilisé en seul mode carrousel, soit ne comprendra que lesdits poteaux de retenue si l'ensemble desdits premier et deuxième plateaux tournants est entraîné concomitamment en rotation et utilisé en mode panier ou en mode mixte, soit comprendra desdits poteaux de retenue et desdits poteaux internes de support d'enroulement si l'ensemble des deux premier et deuxième plateaux tournants est apte à être entraîné concomitamment en rotation et utilisé en mode panier ou en mode mixte.

Selon un premier mode de réalisation préféré, la face supérieure dudit plateau tournant est plane et arrive sensiblement au niveau du plan dudit pont autour dudit plateau tournant.

Selon un autre mode de réalisation, la face supérieure dudit plateau tournant est de forme conique, de préférence centrée dans l'axe longitudinal médian XX' du navire, présentant un demi-angle au sommet α supérieur à 95 centigrades, de préférence de 98 à 99 centigrades, de préférence encore de demi-angle au sommet α de valeur sensiblement identique à l'angle d'inclinaison par rapport à la verticale des deux parties planes P₁,P₂ du pont du navire, respectivement en légère pente ß par rapport à l'horizontale vers tribord P₂ et bâbord P₁ à partir d'une arête centrale disposée le long de ladite direction longitudinale axiale médiane XX' du navire.

On comprend que lorsque ledit plateau tournant est un plateau tournant double constitué d'un dit premier plateau tournant interne et d'un dit deuxième plateau annulaire, ledit premier plateau tournant sera de forme conique, tandis que le deuxième plateau tournant de même demi-angle au sommet sera de forme tronconique.

Dans tous les cas, chaque partie dudit plateau tournant, le cas échéant chaque partie dudit deuxième plateau tournant ne dépasse pas, dans une direction perpendiculaire au dit plan, le niveau dudit plan du pont la plus proche qui lui est juxtaposé, c'est-à-dire le plan dudit pont qui est situé du même côté de ladite arête centrale que ladite partie de plateau tournant.

La présente invention fournit encore plus particulièrement, un navire de pose de conduite en mer selon l'invention comportant en outre une tour de pose en J et au moins une dite conduite souple enroulée autour d'un dit dispositif de stockage et manutention comportant un dispositif de maintien et de guidage de portion de conduite s'étendant entre ledit dispositif de maintien et de guidage et la conduite enroulée, ladite conduite comportant une deuxième portion de conduite courbée en forme de chainette soumise à la tension de son seul poids propre s'étendant entre ledit dispositif de maintien et de guidage et une poulie disposée à une hauteur supérieure sur la tour, de préférence au sommet de la tour, et une troisième portion de conduite s'étendant rectilignement dans la tour étant tensionnée à l'aide d'un deuxième dispositif de traction solidaire de ladite tour de pose en J, de préférence du type tensionneur à chenilles.

Les moyens aptes à déplacer verticalement et/ou horizontalement ladite première portion de conduite s'étendant entre ledit dispositif de maintien et de guidage et la conduite déjà ou encore enroulée sur lesdits supports d'enroulement, peuvent comprendre selon les modes de réalisation du dispositif de stockage et de manutention, les variantes suivantes :
1) en mode de réalisation du dispositif de stockage et de manutention dit de type « panier tournant » : un moteur et des rails et/ou glissières de guidage aptes à déplacer horizontalement ledit dispositif de maintien et de guidage le long dudit rail et/ou glissière horizontale supporté(e) par une poutre transversale horizontale d'un portique support dudit dispositif de maintien et de guidage, et
2) en mode de réalisation du type « carrousel » : un moteur et des rails et/ou glissières verticales de guidage aptes à déplacer verticalement ledit dispositif de traction le long dudit rail et/ou glissière supporté(e) par un poteau et/ou une tour portant ledit dispositif de traction, et
3) en mode de réalisation mixte « carrousel »/ « panier tournant » : un moteur apte à déplacer verticalement une dite poutre transversale horizontale supportée par une tour ou des poteaux d'un portique et un moteur apte à déplacer horizontalement ledit dispositif de maintien et de guidage le long de ladite poutre transversale horizontale, et
4) dans tous les différents modes de réalisation, « carrousel », « panier tournant » et/ou mixte, on peut également mettre en oeuvre des moyens annexes tels que des bras articulés, aptes à déplacer ladite première portion de conduite verticalement et/ou horizontalement coopérant avec un dispositif de maintien et de guidage fixe et/ou lui-même apte à être déplacé verticalement et/ou horizontalement.

Plus particulièrement encore, ladite conduite souple est une conduite flexible sous marine.

La présente invention fournit également un procédé de pose d'une conduite souple en mer depuis un navire selon l'invention, dans lequel on réalise les étapes suivantes :
1) on déplace le navire de manière synchronisée avec le défilement de la conduite au niveau dudit deuxième dispositif de traction au sein de la tour de pose en J, de préférence un dit deuxième tensionneur à chenilles, et
2) on déroule ladite conduite en actionnant de manière synchronisée la rotation dudit plateau tournant, et le déplacement de ladite première portion de conduite s'étendant entre ledit dispositif de maintien et de guidage et la conduite enroulée, de manière à maintenir la courbure de ladite portion de conduite s'étendant entre ledit dispositif de maintien et de guidage et ladite poulie disposée à une hauteur supérieure sur la tour, avec une courbure en chainette dont la courbure est en tous points supérieure à la courbure minimale acceptable de la conduite souple et telle que de préférence ladite portion de conduite en chainette ne touche pas le pont du navire.

Dans un premier mode de réalisation du procédé selon l'invention, on déroule une dite conduite souple enroulée en mode carrousel en exerçant une tension sensiblement constante sur ladite première portion de conduite s'étendant sensiblement horizontalement entre le dispositif de maintien et de guidage de conduite et la conduite enroulée sur un dit fût central, à l'aide d'un dispositif de traction, de préférence du type tensionneur à chenilles au niveau dudit dispositif de maintien et de guidage de conduite.

On comprend que ce premier mode de réalisation du procédé peut être effectué avec un dispositif de stockage et de manutention du type dénommé « carrousel » ou de type mixte.

Dans un deuxième mode de réalisation du procédé selon l'invention, on déroule une dite conduite souple enroulée en mode panier tournant sans exercer de tension sur ladite première portion de conduite s'étendant en position inclinée entre le dispositif de maintien et de guidage de conduite et la conduite enroulée, en synchronisant la vitesse de défilement de la conduite à l'aide d'un dispositif de traction, de préférence du type tensionneur à chenilles au niveau dudit dispositif de maintien et de guidage de conduite, et la vitesse de rotation dudit plateau tournant.

On comprend que ce deuxième mode de réalisation du procédé peut être mis en oeuvre avec un dispositif de stockage et de manutention du type « panier tournant », du type mixte décrit ci-dessus.

Dans un mode préféré de réalisation du procédé selon l'invention, on met en oeuvre un dispositif de stockage et manutention de type mixte avec :
- une dite première conduite, de préférence une première conduite flexible, de plus petit diamètre enroulée sur un dit fût central en mode carrousel, et
- une deuxième conduite souple, de préférence une deuxième conduite flexible de plus grand diamètre, enroulée en mode panier tournant sur desdits poteaux internes et retenus par desdits poteaux périphériques de retenue,
ledit procédé étant caractérisé en ce que l'on réalise les étapes successives suivantes :
1) on déroule et on pose en mer ladite deuxième conduite, puis
2) on démonte lesdits poteaux internes et dits poteaux périphériques de retenue et,
3) on effectue le déroulement et la pose en mer de ladite première conduite.

Le démontage des accessoires spécifiques dudit panier tournant est nécessaire pour permettre la mise en oeuvre du déplacement en translation verticale de ladite première portion de conduite pour son trancanage lors du déroulement.

Inversement, dans un procédé de stockage par enroulement de deux conduites souples sur un dispositif de stockage et de manutention de type « mixte », on procèdera selon les étapes successives suivantes :
1) enroulement de ladite première conduite autour dudit fût central en mode carrousel, et
2) montage des accessoires de type « panier tournant » comprenant lesdits poteaux internes et de support d'enroulement et poteaux périphériques de retenue, et
3) enroulement de ladite deuxième conduite autour desdits poteaux internes de support d'enroulement du panier tournant, en mode panier tournant.

D'autres caractéristiques et avantages de la présente invention ressortiront mieux à la lumière de la description détaillée qui va suivre, faite de manière illustrative et non limitative, en référence aux dessins sur lesquels :
- la figure 1 est une vue de côté d'un navire de pose équipé d'une tour de pose en J et d'un dispositif de stockage et de manutention de conduite souple enroulée en mode dénommé « carrousel »,
- la figure 1A est une vue de côté des divers accessoires dudit carrousel destinés à être solidarisés de façon réversible, c'est-à-dire démontable, à un plateau tournant d'un dispositif de stockage et manutention selon la figure 1 installés sur le pont du navire de pose et sur ledit plateau, ce dernier étant sensiblement en continuité de plan avec ledit pont,
- la figure 1B est une vue de dessus du plateau tournant détaillant les moyens d'accrochage des divers accessoires,
- la figure 1C est une vue de côté du pont d'un navire comportant un plateau tournant d'un dispositif de stockage et manutention selon l'invention, ledit plateau tournant étant sensiblement dans le même plan que ledit pont,
- la figure 1D est une vue de côté dudit carrousel de la figure 1 détaillant la séquence de mise en place des différentes spires et couches de conduite souple sur le fût dudit carrousel, en enroulement au stade d'enroulement de l'avant dernière spire au sommet de la troisième couche,
- la figure 2 est une vue de côté d'un navire de pose équipé d'une tour de pose en J et d'un dispositif de stockage et de manutention de conduite souple enroulée selon un mode dénommé « panier tournant »,
- la figure 2A est une vue de dessus du dispositif de stockage de type panier tournant de la figure 2,
- la figure 2B est une vue de côté en coupe partielle à droite selon AA de la figure 2A, détaillant la séquence de mise en place des différentes spires et couches de conduite souple sur le plateau tournant constituant le fond du dispositif de type panier tournant, au stade d'enroulement de la deuxième spire concentrique de la troisième couche superposée au sommet,
- la figure 2C est une vue de dessus du dispositif de trancanage 2 d'un dispositif de type panier tournant de la figure 2, pouvant aussi coopérer avec un dispositif de type carrousel 3 de la figure 1, ou encore un dispositif mixte (figures 3C et 3D) décrit ci-après,

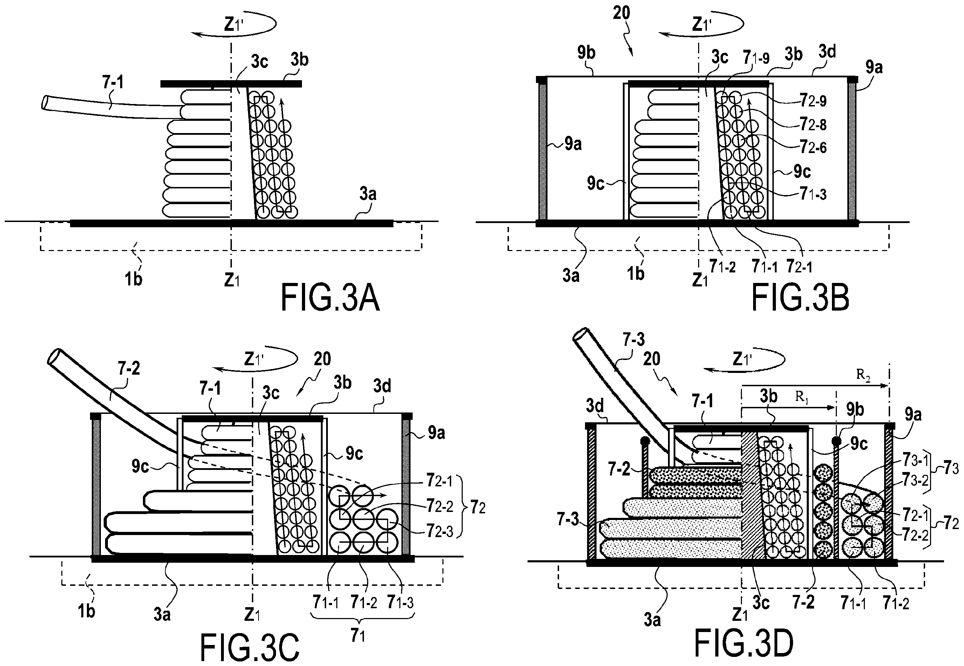

- les figures 3A, 3B et 3C sont des vues de côté, en coupe partielle à droite, détaillant une version préférée de l'invention décrivant un dispositif de stockage et manutention mixte : carrousel/panier tournant, dans lequel une première conduite souple 7-1 est stockée en mode carrousel enroulée autour d'un fût central (figures 3A, 3B et 3C), et une seconde conduite 7-2 est stockée en mode panier tournant sur la périphérie dudit panier tournant, ladite deuxième conduite étant enroulée autour de premiers poteaux intermédiaires ou poteaux internes 9c formant des deuxièmes supports d'enroulement disposés autour de ladite première conduite enroulée (figures 3B et 3C). Sur la figure 3A, on n'a représenté que la première conduite en cours d'enroulement en mode carrousel. Sur la figure 3B, on a représenté en outre les premiers poteaux intermédiaires 9c servant de deuxième support d'enroulement d'une deuxième conduite en mode panier tournant et en cours d'enroulement en mode panier tournant. Et, sur la figure 3C, on a représenté en outre la deuxième conduite en cours d'enroulement en mode panier tournant sur les accessoires du panier tournant, les poteaux périphériques 9a servant de poteaux de retenue périphérique de la deuxième conduite,
- sur la figure 3D, on a représenté un dispositif de stockage et de manutention de type mixte, carrousel ou panier tournant, sur lequel sont enroulés une première conduite 7₁ en mode carrousel, une deuxième conduite 7₂ en mode panier tournant, et une troisième conduite 7₃ en mode panier tournant,

- la figure 3E représente un fût central d'un dispositif selon l'invention équipé d'un flasque supérieur 3b au sommet du fût central et d'un flasque circulaire intermédiaire 3b' entourant ledit fût central permettant ainsi d'y enrouler deux premières conduites 7-1a et 7-1b,
- la figure 4 est une vue de côté d'un navire de pose équipé d'une tour de pose en J et d'un dispositif de stockage et de manutention de conduite souple de l'art antérieur du type à motorisation mobile sur rails apte à venir s'adapter successivement sur chacune des bobines installées en ligne les unes derrière les autres sur le pont du navire,
- la figure 5 est une vue de côté d'un navire de pose équipé d'une tour de pose en J, en opération de pose de conduites rigides, par assemblage de rames préfabriquées, au sein de ladite tour de pose en J, lesdites rames étant stockées sur le pont du navire au niveau du plateau tournant d'un dispositif selon l'invention après démontage des accessoires,
- la figure 6A est une vue de dessus d'un navire d'installation équipé d'un plateau tournant centré sur l'axe longitudinal médian XX' du navire, d'un diamètre légèrement inférieur à la largeur totale dudit navire,
- la figure 6B est une vue de dessus d'un navire d'installation équipé d'un plateau tournant double installé en décalage vers bâbord par rapport à l'axe longitudinal médian XX' du navire,
- la figure 7A représente un plateau tournant plan vu en coupe verticale, centré selon l'axe longitudinal XX' du navire comme représenté sur la figure 6A, le pont du navire étant constitué de deux plans P₁ et P₂ disposés en pente d'angle ß respectivement vers bâbord P₁ et tribord P₂ de chaque côté d'une arête centrale disposée dans la direction longitudinale XX' du navire,
- la figure 7B représente une coupe verticale d'un plateau tournant dont la face supérieure S de forme conique centrée dans l'axe longitudinal XX' du navire de demi-angle au sommet α correspondant à la valeur de l'angle d'inclinaison par rapport à la verticale des deux plans inclinés respectivement P₁ vers bâbord et P₂ vers tribord constituant le pont 1a du navire.

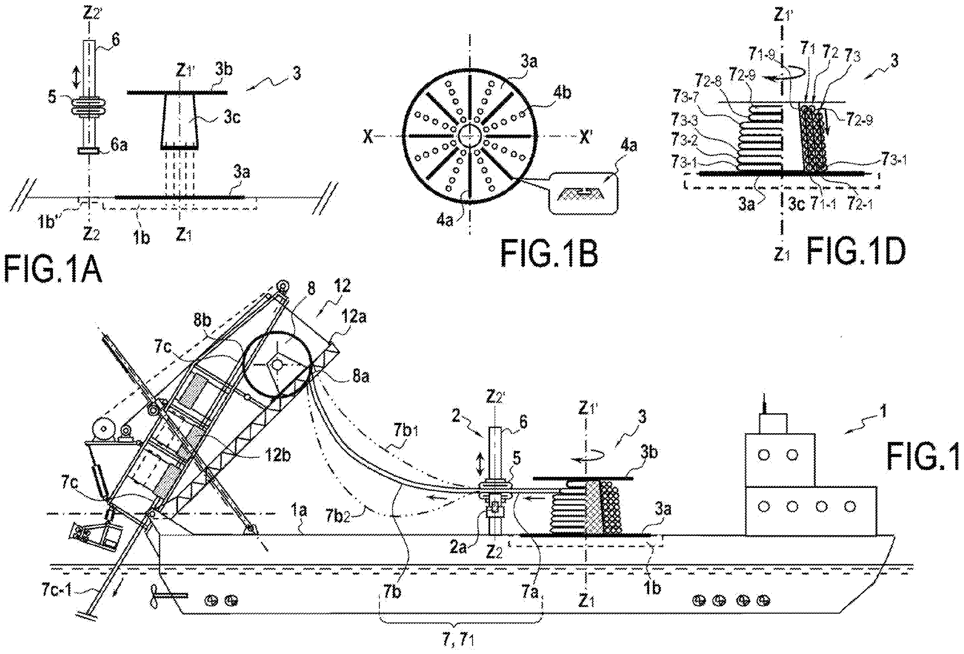

Sur la figure 1 on a représenté en vue de côté un navire de pose 1 équipé d'une tour de pose en J 12 et d'un dispositif de stockage et de manutention de conduite souple, selon un premier mode de réalisation de type carrousel 3. Le dispositif est constitué d'un plateau tournant 3a actionné en rotation autour d'un axe Z₁Z₁' perpendiculaire au dit plateau par des moyens de rotation 3a' représentés sur la figure 1C, et comprenant une motorisation 3a'-1, entraînant en rotation des engrenages 3a'-2 en périphérie dudit plateau 3a, ledit plateau 3a étant entraîné en rotation du fait qu'il coopère avec un arbre central de rotation 3a'-5, de même axe Z₁Z₁' coopérant avec des roulettes 3a'-3 situées en sous-face dudit plateau tournant par-dessus un plancher 3a'-4 fixé sur la structure porteuse de la coque et du pont du navire ou poutre-navire.

De façon connue de l'homme de l'art, la partie 1c de poutre-navire en dehors de la cavité 1b comprend en sous face du pont, comme représenté figure 1C :
- des éléments de structure transversaux principaux ou couples principaux 1d, et
- des éléments de structure transversaux secondaires ou menbrures encore appelés « plat à boudin » 1g, et
- des poutres primaires longitudinales 1f.

La création d'une cavité 1b est connue de l'homme de l'Art, notamment pour créer une cavité permettre l'accès aux cales du navire depuis le pont.

Pour créer la cavité circulaire 1b, on configure la partie 11 de la poutre-navire, au sein de la cavité 1b, avec des éléments de renforts supplémentaires 11 rabaissés comprenant :
- des éléments de renfort transversaux principaux formant desdits couples 1e et des éléments de renfort transversaux secondaires en forme de menbrures ou plats de boudins 1 k en sous face du plancher 3a-4b,plus rapprochés les uns des autres dans la direction longitudinale XX' par rapport aux couples 1d et menbrures 1g dans la partie 1c de la poutre-navire, et
- des poutres longitudinales rabaissées 1h supportant aussi ledit plancher et l'arbre de rotation 3a'-5,plus rapprochées les unes des autres dans la direction transversale perpendiculaire à la direction longitudinale XX' par rapport aux poutres 1f dans la partie 1c de la poutre-navire, et
- les moteur 3a'-1 et engrenage 3a'-2 étant fixés à des éléments de structure 1c de la poutre-navire en bordure de la cavité et/ou des éléments de renfort 1l au sein de la cavité; et
- les roulettes 3a'-3 étant supportées par ledit plancher.

Les roulettes 3a'-3 sont intercalées entre le plateau 3a et la plancher 3a'-4, de préférence sur plusieurs cercles de diamètres décroissants et de même axe vertical Z₁Z₁', pour supporter le poids du plateau des équipements et des conduites flexibles et permettre la rotation du plateau 3a autour de l'axe central de rotation 3a'-5. Pour la clarté des dessins, on n'a représenté sur les différentes figures qu'une seule série de roulettes 3a'-3 réparties sur un même cercle de diamètre sensiblement inférieur au diamètre extérieur dudit plateau tournant. Le moteur 3a'-1 fixé sur un couple transversal 1d ou une menbrure 1g supportant le pont en périphérie de la cavité, coopère avec un système de dents en d'engrenages 3a'-2 montées et/ou coopérant avec la périphérie dudit plateau tournant 3a pour en assurer la rotation.

Le plateau tournant est alors installé dans ladite cavité par-dessus lesdites roulettes et plancher. Le plancher 3a'-4 joue le même rôle que la tôle de pont 1a en ce qui concerne la résistance. L'ensemble est intégré dans la cavité 1b du pont du navire tel que représenté sur la figure 1C, de telle manière que le plan supérieur dudit plateau tournant se trouve sensiblement de niveau avec le pont 1a dudit navire.

Ainsi, c'est essentiellement la « poutre-navire » c'est à dire la structure porteuse de la coque du navire qui assure l'intégralité du transfert des charges verticales du plateau tournant et de son chargement, ainsi que la rigidité nécessaire pour le supportage du plateau tournant et de son chargement.

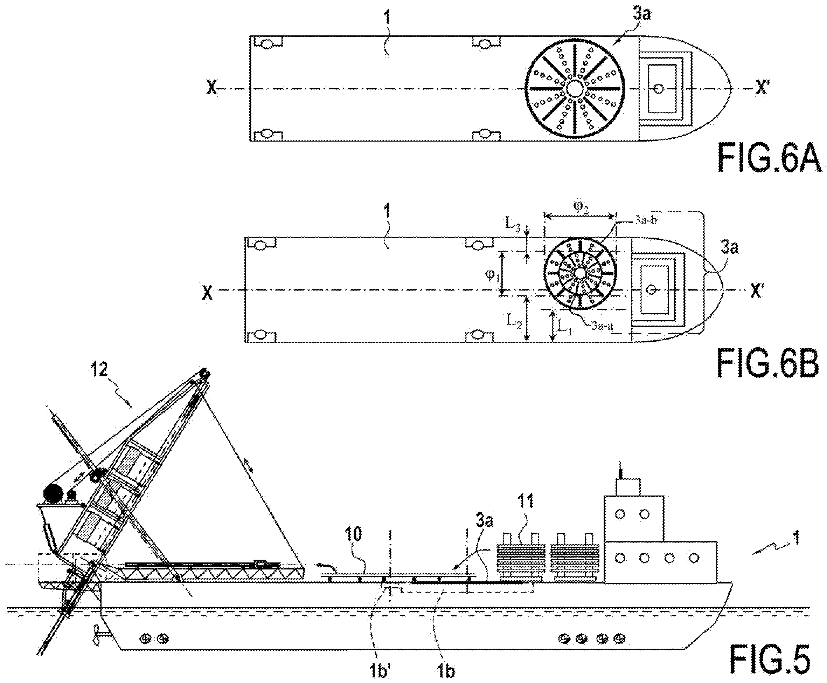

Ledit plateau tournant comporte sur sa face supérieure des éléments d'accrochage 4,4a-4b permettant de venir solidariser des accessoires variés qui seront détaillés plus avant dans la description ci-après de l'invention. Lesdits éléments d'accrochage 4 sont par exemple des rainures en T 4a similaires à celles couramment utilisées sur les machines outils, telles que représentées en plan et en coupe sur la figure 1B, ou encore des éléments d'amarrage 4b similaires à ceux qui sont utilisés pour arrimer les conteneurs à bord des camions ou des navires porte-conteneurs, ou enfin, tout simplement des trous filetés percés à même le plateau et destinés à recevoir des oreilles d'arrimage. Ainsi, lorsqu'aucun accessoire n'est installé sur ledit plateau tournant, le pont du navire est sensiblement plan et disponible pour transporter des charges ou effectuer des opérations diverses, telles celles représentées sur les figures 4 et 5, à savoir, la pose conventionnelle de conduites souples de type flexibles ou câbles électriques à l'aide de treuils 22a-22d d'axes de rotation parallèles au plan du pont et perpendiculaires à l'axe XX' (figure 4A) ou la pose en J de conduites rigides, par assemblage de rames successives (figure 5), ou encore le transport et la manutention de tous types de structures de fortes capacités et de grandes dimensions, sans qu'il y ait nécessité de démonter les éléments constitutifs dudit plateau tournant 3a et de sa structure de supportage, comme c'est le cas dans l'art antérieur.

En mode carrousel du dispositif de stockage et manutention 3, des accessoires sont installés sur le plateau tournant 3a comme représenté sur la figure 1A. Ces accessoires comportent un premier élément de support d'enroulement constitué par un fût 3c de forme cylindro-tronconique ou cylindrique de préférence de révolution dont l'axe Z₁Z₁' coïncide de préférence avec l'axe dudit plateau tournant 3a, ainsi qu'un flasque supérieur 3b, de préférence circulaire, de même axe vertical ZZ'. Le flasque supérieur 3b est solidaire du fût 3c à son sommet, la base du fût 3c étant rendue solidaire du plateau tournant 3a au niveau des éléments d'accrochage 4. Une conduite 7 est enroulée autour du fût 3c entre le flasque supérieur 3b et le plateau tournant 3a formant un flasque inférieur. Un premier tensionneur à chenilles 5, ou à pneus, connu de l'homme de l'art, disposé entre le dispositif de type carrousel 3 et la tour de pose en J 12 exerce de manière connue une tension sur la première portion 7a horizontale de conduite souple 7 s'étendant entre le tensionneur 5 et la dernière spire de la dernière couche de la conduite enroulée. Cette tension est réglée de façon à ce que ladite tension soit maintenue à une valeur sensiblement constante, par exemple une tension de 5 tonnes, de manière à ce que l'enroulement de ladite conduite sur le carrousel reste organisé comme illustré sur la figure 1D, à savoir que les spires 7i-1 à 7i-l avec l = 8, de chacune des couches cylindriques 7i avec i = 1 à 3, concentriques où chacune étant constituée de spires hélicoïdales superposées reste stable et que l'ensemble des spires ne s'effondre pas, ce qui conduirait à un chevauchement des spires et/ou risquerait d'endommager gravement ladite conduite flexible. Pour assurer, lors du chargement/enroulement de la conduite sur le carrousel ou de la dépose/déroulement de la conduite, un fonctionnement correct du dispositif de type carrousel 3, on met en oeuvre un dispositif de trancanage 2 apte à déplacer en hauteur le tensionneur à chenilles 5 le long d'un élément de support 6 s'étendant dans une direction Z₂Z'₂ perpendiculaire au dit pont de manière à ce que la première portion 7a de la conduite disposée entre le tensionneur à chenilles 5 et le dispositif 3 reste toujours sensiblement horizontale. Ledit support 6, installé sur bâbord, est constitué d'une tour ou un poteau muni d'éléments de guidages du tensionneur à chenilles 5 et d'une motorisation 2a, la base du poteau 6 étant solidaire en 1b' du pont 1a du navire à proximité du carrousel 3, de préférence le plus près possible. Ainsi lors du chargement/enroulement de la conduite souple 7,7-1 sur ledit carrousel 3, on met en rotation le plateau 3a dans le sens des aiguilles d'une montre, et on ajuste, de manière connue la position en hauteur du premier tensionneur à chenilles 5 de manière à ce que la première portion 7a de conduite entre le tensionneur 5 et le carrousel 3 reste sensiblement horizontale et que les spires 7₁-1 à 7₁-9 de conduite s'enroulent bien les unes au-dessus des autres, tout en restant en contact intime avec la spire précédente, au fur et à mesure de la montée de la première couche 7₁ la plus proche du fût central, puis que les spires 7₂-9 à 7₂-1 de conduites s'enroulent les unes au dessous des autres de manière juxtaposée contre le fût central 3c pendant la constitution de la deuxième couche 7₂ jusqu'à rejoindre la plateau tournant et réitérer une remontée du tensionneur à chenilles 5 pour réaliser par enroulement la troisième couche 7₃ de spires 7₃-1 à 7₃-9. Pendant toute la durée du chargement, on maintient une tension sensiblement constante, par exemple 5 tonnes grâce au tensionneur 5, de manière à ce que chacune des spires vienne se positionner contre la précédente.

Sur la figure 1D, la flèche représente le sens en montée, puis en descente, puis à nouveau en montée de la progression des couches 7₁,7₂ et respectivement 7₃ et des spires 7i-1 à 7i-n avec i = 1 à 3 et n = 9 lors du chargement par enroulement de la conduite souple 7 sur le carrousel 3.

Plus précisément, on réalise la première couche 7₁ depuis la première spire inférieure 7₁-1 reposant sur le plateau tournant 3a jusqu'à la dernière spire supérieure 7₁-9 en dessous du flasque supérieur 3b. Puis, arrivé en haut du fût 3c, l'enroulement commence alors une couche supplémentaire 7₂ à partir d'une première spire supérieure 7₂-9 dessous le flasque supérieur 3b disposé à côté et contre la spire dernière supérieure 7₁-9, de la première couche 7₁, jusqu'à une dernière spire inférieure 7₂-1 de la deuxième couche reposant sur le plateau 3a contre et à côté de la première spire inférieure 7₁-1 de la première couche 7₁. Puis, on forme une troisième couche 7₃ à partir d'une première spire 7₃-1 disposée contre la spire 7₂-1 reposant sur le plateau 3a de la deuxième couche 7₂ jusqu'à la spire supérieure (non représentée) de la troisième couche 7₃ sous le flasque supérieur 3b. Lors des montées et descentes du premier tensionneur à chenilles 5, sa vitesse de montée et de descente est synchronisée avec la vitesse de rotation du plateau tournant. Pendant tout le déroulement ou enroulement de la conduite souple 7 sur le carrousel 3, ledit premier tensionneur à chenilles 5 est opéré en mode dit à tension constante, connu de l'homme de l'art dans le domaine des treuils. Ainsi, si le niveau de tension constante est fixé par exemple à T₀=5 tonnes, si la tension tend à augmenter au-dessus du seuil fixé de T₀, le tensionneur déroulera une certaine longueur, ce qui aura pour effet de ramener la tension à T₀ ; de la même manière, si la tension tend à baisser en dessous du seuil fixé T₀, le tensionneur enroulera une certaine longueur, ce qui aura pour effet de ramener la tension à T₀=5 tonnes.

Plus particulièrement, le premier tensionneur 5 coopère avec des moteurs à vérins hydrauliques associés à une centrale thermique réglés, de manière à ce que ledit premier tensionneur à chenilles 5 exerce une dite traction T₀ sur la portion de conduite 7a. Ainsi, si le plateau tournant 3a tourne de manière à dérouler la conduite souple 7, la tension dans la portion de conduite 7a diminuant, le tensionneur à chenilles est commandé pour automatiquement augmenter la tension qu'il exerce sur la portion de conduite 7a en actionnant la rotation de ses chenilles qui viennent en appui en frottement sur la conduite de manière à ce que la tension résultante exercée sur la portion de conduite 7a par le premier tensionneur à chenilles, soit à nouveau de T₀. Inversement, lors de l'enroulement, si du fait de la rotation du plateau tournant 3a la tension dans la portion de conduite 7a vient à dépasser la tension T₀ dans la portion de conduite 7a, les chenilles dudit premier tensionneur à chenilles 5 vont tourner en sens inverse de manière à déplacer la portion de conduite 7a dans le sens de l'enroulement, c'est-à-dire en direction du carrousel 3 pour ramener la tension résultante dans la portion de conduite 7a à la valeur T₀ et permettre l'enroulement de la conduite souple sur le carrousel 3. Pendant tout le transport, on maintient également une tension dans la portion de conduite 7a, par exemple de 2 à 5 tonnes, de manière à éviter l'effondrement de l'ensemble cylindro-tronconique de la conduite enroulée autour du fût 3c. En effet, à défaut d'exercer cette tension, les dernières spires pourraient avoir tendance à s'écarter du fût, provoquant ainsi la chute des spires suivantes, celles-ci ne se trouvant plus maintenues.

La conduite 7, dans sa portion de conduite 7b, qui s'étend depuis le tensionneur à chenilles 5 jusqu'au sommet de la tour de pose en J 12, adopte une configuration de courbure en chaînette. Une poulie de grande dimension 8 est installée solidaire de la rampe de relevage 2a au sommet de la tour 12, ladite portion 7b de conduite souple entrant en 8a dans la gorge de ladite poulie 8 et la portion de conduite 7c sortant en 8b, sensiblement dans l'axe de pose de ladite tour 12. La conduite souple passe alors dans au moins un deuxième tensionneur à chenilles 12b au seine de la tour, qui maintient la portion de conduite 7c en suspension en 7c-1 jusqu'au fond de la mer. Ainsi, lors de la pose, la conduite souple 7 se trouve en tension modérée dans la portion 7a, sensiblement sans tension autre que celle générée par son poids propre dans la portion de conduite 7b en forme de chaînette, puis soumise à la tension de pose générée par le deuxième tensionneur à chenilles 12b dans la portion 7c de par son poids, ladite tension de pose pouvant atteindre 100 à 150 tonnes, voire plus pour les conduites de gros diamètre et les grandes profondeurs d'eau.

On règle le défilement de la conduite lors de son déroulement autour du carrousel 3 et au sein de la tour 12, de manière à ce que la courbure de la portion de conduite 7b reste comprise entre les deux courbes limites 7b-1 et 7b-2, de manière à maintenir la courbure de ladite portion de conduite 7b avec une courbure toujours supérieure à la courbure minimale acceptable au niveau de sa jonction avec la poulie 8 comme au niveau de sa jonction avec le tensionneur 5, c'est-à-dire une courbure avec un rayon de courbure supérieur au rayon de courbure minimal acceptable de la conduite.

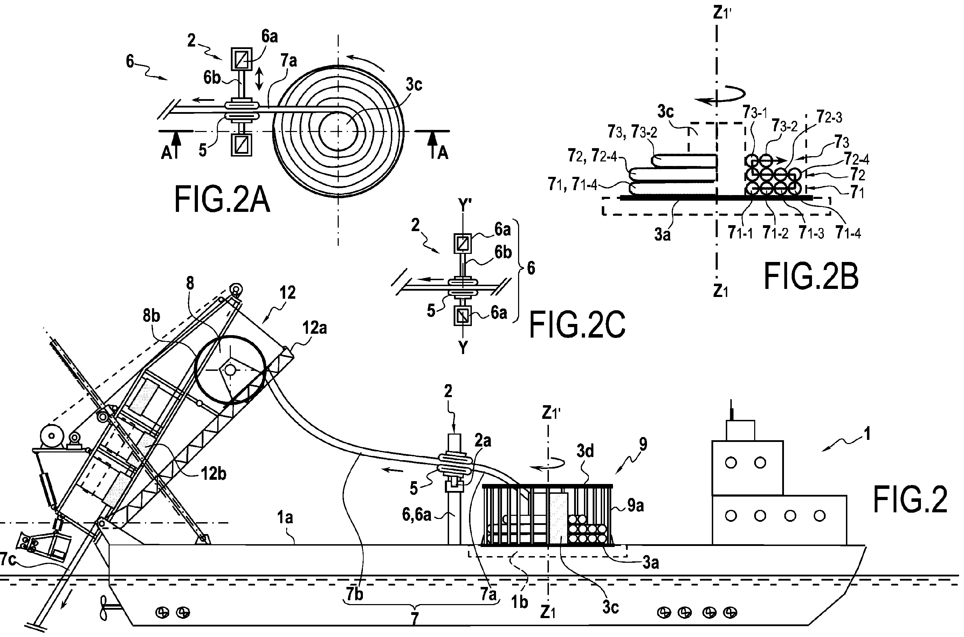

Sur la figure 2, on a représenté en vue de côté un navire de pose 1 équipé d'une tour de pose en J 12 et d'un deuxième mode de réalisation d'un dispositif de stockage et manutention du type dénommé « panier tournant » 9. Ledit panier tournant, représenté en coupe partielle à droite, est constitué dudit plateau tournant 3a, sur lequel on dispose un fût central 3c, dont l'axe vertical Z₁Z₁' coïncide avec celui dudit plateau tournant 3a. On dispose à la périphérie du plateau tournant une pluralité de poteaux périphériques de retenue 9a disposés verticalement et répartis de préférence de manière régulière circulairement par rapport à un axe Z₁Z₁' coïncidant avec l'axe du plateau tournant, lesdits poteaux périphériques 9a étant de préférence reliés entre eux par exemple à leur sommet par une virole supérieure 3d dont le diamètre interne est de préférence égal ou supérieur au diamètre du cercle tangent à la face interne de l'ensemble des poteaux 9a. Ainsi, la partie supérieure du panier 9 est entièrement libre, car elle ne comporte pas de flasque supérieur au sommet du fût 3c. Ladite conduite souple 7 est manutentionnée à l'aide d'un dispositif de trancanage 2 comprenant un dit premier tensionneur à chenilles 5 monté sur un portique support 6 à hauteur fixe par rapport au pont 1a du navire et situé au dessus de la hauteur de la virole supérieure 3d de sorte que la portion de conduite 7a rejoignant le fût 3c depuis le premier tensionneur à chenilles 5 présente une inclinaison en légère courbure naturelle et non contrainte. Ledit portique 6 est représenté sur les figures 2A et 2C ; il comporte une poutre transversale horizontale 6b dans la direction transversale YY' fixée sur deux poteaux latéraux verticaux 6a, de sorte que ledit premier tensionneur à chenilles 5 monté sur ladite poutre transversale 6b peut se déplacer dans la direction horizontale YY' grâce à une motorisation (non représenté), constituant ainsi un dispositif de trancanage horizontal apte à permettre de diriger la première portion 7a de conduite souple vers le fût 3c du panier tournant dans une direction maintenue en permanence sensiblement tangente à la spire en formation, comme représenté figure 2A.

Dans ce deuxième mode de réalisation du type « panier tournant » tel que montré sur les figures 2A et 2B, on réalise ainsi 3 couches 7₁, 7₂ et 7₃ superposées, chacune comprenant p=4 spires concentriques juxtaposées 7i-1 à 7i-p avec i = 1 à 3, les unes contre les autres. Plus précisément, la première couche part d'une première spire 7₁-1 reposant sur le plateau tournant 3a et disposée contre la périphérie du fût central 3c, puis par rotation du plateau tournant et déplacement du tensionneur à chenilles 5 le long de la poutre transversale 6b, on réalise une deuxième spire 7₁-2 concentrique disposée contre la première spire 7₁-1 et ainsi de suite, jusqu'à une quatrième spire concentrique 7₁-4 arrivant en périphérie du plateau tournant 3a sur laquelle elle repose et contre les faces internes d'une série de poteaux périphériques 9a accrochés sur le plateau 3a et permettant de retenir les différentes couches superposées 7₁, 7₂ et 7₃. Lorsque la première couche est complète, la conduite vient buter contre les poteaux périphériques et ne peut alors s'échapper que vers le haut, ce qui amorce naturellement la couche suivante. Ainsi, pour la réalisation de la deuxième couche 7₂, on part d'une spire périphérique 7₂-4 disposée contre la face interne des poteaux 9a au dessus de la dernière spire 7₁-4 de la première couche, puis en déplaçant en sens inverse le tensionneur à chenilles 5 dans la direction horizontale le long de la poutre transversale 6b et en tournant le plateau 3a, on réalise une spire concentrique 7₂-3 de diamètre légèrement inférieur et disposé contre la face interne de la conduite flexible constituant la spire 7₂-4 et ainsi de suite, on réalise les spires 7₂-2, puis 7₂-1 de diamètres décroissants.

On comprend que les poteaux de retenue 9a limitent la position extrême des spires 7i-4, et permettent d'initier, lors du chargement la couche supérieure. Ces poteaux de retenue 9a donnent de plus à l'ensemble une stabilité de forme et tout particulièrement une stabilité à la couche supérieure.

Dans ce deuxième mode de réalisation de dispositif de stockage et manutention en mode panier tournant 9, le premier tensionneur à chenilles 5 ne fait que maintenir la conduite souple 7 de telle sorte que ces première et deuxième portions de conduite 7a et 7b adoptent une certaine courbure sans exercer de tension significative dans la première portion de conduite 7a entre ledit premier tensionneur à chenilles 5 et le dispositif panier tournant 9 contrairement à ce qui se passe pour le premier mode de réalisation du dispositif de type carrousel 3.

Sur la figure 2B, on a représenté le sens de réalisation d'un chargement par enroulement couche après couche, illustrant en vue de côté la progression des spires et des couches dans ce deuxième mode de réalisation de dispositif de stockage et manutention de type panier tournant 9, chaque couche comportant ici 4 spires. Lorsque l'on amène la conduite 7 vers le panier tournant 9 pour l'enroulement de la conduite ou lorsque l'on extrait la conduite souple 7 du panier tournant 9 pour son déroulement et pose en mer, on synchronise la rotation du plateau tournant et le déplacement en translation du dispositif de trancanage dans la direction horizontale, ainsi que la vitesse de rotation des chenilles du premier tensionneur à chenilles 5, de sorte que les courbures des courbes 7a et 7b soient acceptables, notamment avec un rayon de courbure supérieur au rayon de courbure minimal acceptable de la conduite.

Comme représenté sur la figure 2A, lors de l'installation sur site, le premier tensionneur à chenilles 5 est actionné pour dérouler et extraire la conduite souple 7 du dispositif de type panier tournant 9, pour la diriger vers la poulie 8 sur la tour 12, puis vers le deuxième tensionneur à chenilles 12b. Ainsi, seule la portion 7c s'étendant dessous le deuxième tensionneur 12b est soumise à une tension de pose importante, les deux autres portions de conduite 7a et 7b n'étant soumises qu'à de faibles tensions de manutention, c'est à dire quelques tonnes, voire moins.

Sur la figure 3C on a illustré en vue de côté une première variante d'un mode de réalisation de dispositif stockage et manutention mixte carrousel / panier tournant 20 selon l'invention. Dans cette variante de réalisation, on installe tout d'abord un fût tronconique 3c et un flasque supérieur 3b dont le diamètre externe est inférieur au diamètre du plateau tournant 3a, ledit diamètre du flasque supérieur 3b étant supérieur à celui de la dernière couche 7₃ de la première conduite 7-1 en mode carrousel comme décrit précédemment en liaison avec les figures 1 et 1A-1D à stocker en mode carrousel. Puis, on stocke par enroulement une première conduite 7-1 sur le dispositif en mode carrousel autour d'un fût central 3c disposé coaxialement au dit plateau tournant 3a, comme représenté sur la figure 3A. Après chargement/enroulement de la première conduite flexible 7-1, on vient installer les accessoires qui vont transformer le dispositif en mode panier tournant comme suit. On installe successivement une série de premiers poteaux intermédiaires dénommés « poteaux internes » 9c répartis de préférence de manière uniforme et de préférence de manière circulaire, de préférence solidarisés à leur base aux éléments d'accrochage sur le plateau tournant 3a et à leur sommet au niveau de l'extérieur du flasque supérieur 3b au sommet du fût 3c. L'ensemble desdits premiers poteaux intermédiaires peut jouer alors le rôle de deuxième support d'enroulement équivalent au fût du dispositif de type panier tournant 9 de la figure 2 pour l'enroulement d'une deuxième conduite 7-2. Puis, on installe une série de poteaux périphériques de retenue 9a disposés comme indiqué ci-dessus en périphérie du plateau tournant 3a, solidarisés à leur base à des éléments d'accrochage 4 du plateau tournant 3a et de préférence solidarisés en tête entre eux par une virole circulaire 3d. On effectue alors le chargement/enroulement de la deuxième conduite flexible en mode panier tournant comme décrit précédemment, en liaison avec les figures 2 et 2A-2C.

Lesdits poteaux périphériques 9a sont répartis de préférence régulièrement le long de la périphérie circulaire du plateau 3a, et les poteaux internes 9c sont disposés à proximité de la dernière couche périphérique 7₃ de la première conduite 7-1 enroulée sur le fût 3c.

Puis, on stocke par enroulement une deuxième conduite souple 7-2 en mode panier tournant. Pour ce faire, on enroule la première spire 7₁-1 de la première couche 7₁ de la deuxième conduite 7-2 contre la face externe des poteaux internes 9c de support d'enroulement de la deuxième conduite 7-2, puis comme décrit dans le mode panier tournant, on réalise les deuxième spires 7₁-2 et troisième spire 7₁-3 concentriques juxtaposées côte à côte jusqu'à la face interne des poteaux périphériques 9a, puis on réalise l'enroulement des deuxième couche 7₂ constituée des spires 7₂-3, 7₂-2, puis 7₂-1 respectivement depuis les poteaux de retenue périphériques 9a jusque vers les supports d'enroulement ou poteaux internes 9c, et troisième couche 7₃ comme décrit précédemment depuis les poteaux internes 9c vers les poteaux de retenue 9a. Pour l'installation des conduites et leur déroulement, on effectuera en premier le déroulement et la pose de la deuxième conduite 7-2 en mode panier tournant, puis on démontera les accessoires spécifiques au panier tournant, à savoir les poteaux internes 9c et poteaux de retenue périphériques 9a pour effectuer le déroulement et la pose de la première conduite 7-1 en mode carrousel.

Ce démontage est nécessaire, car autrement, la première portion 7a de conduite en sortie du dispositif en mode carrousel ne pourrait pas s'étendre horizontalement pendant son trancannage, lesdits poteaux intermédiaires 9c et poteaux de retenue 9a l'en empêchant.

Sur la figure 3D, on a représenté une deuxième variante de réalisation d'un dispositif mixte carrousel/panier tournant 20 selon l'invention. On stocke en premier une première conduite flexible 7-1 en mode carrousel sur un fût central 3c comme décrit précédemment. Puis, on installe deux séries de premiers et respectivement deuxièmes poteaux intermédiaires 9c et 9b. La série de premiers poteaux intermédiaires 9c est répartie sur un cercle de rayon R1, la série de deuxièmes poteaux intermédiaires 9b étant répartie sur un second cercle de rayon R2 supérieur à R1. Ainsi, on peut charger en mode panier tournant une deuxième conduite flexible 7-2 contre lesdits premiers poteaux intermédiaires ou poteaux internes 9c jusqu'au dit deuxièmes poteaux intermédiaires 9b faisant office de deuxièmes poteaux de retenue de ladite deuxième conduite 7-2. Sur la figure 3D, la deuxième conduite 7-2 est enroulée contre les poteaux internes 9c selon cinq couches superposées d'une seule spire disposée hélicoïdalement. Les deuxièmes poteaux intermédiaires 9b servent de troisième support d'enroulement d'une troisième conduite 7-3 dont on a représenté sur la figure 3D trois couches 7₁ à 7₃ de deux spires concentriques juxtaposées 7ᵢ-p avec i = 1 à 3 et p = 1 à 2. La troisième conduite 7-3 est chargée en enroulement en mode panier tournant après avoir toutefois installé les poteaux périphériques de retenue 9a assurant la retenue de la troisième conduite flexible 7-3.

Lors de la pose en mer desdites conduites, on doit d'abord réaliser le déroulement et la pose de l'une quelconque des deuxième ou troisième conduites 7-2 ou 7-3 indifféremment. On remarquera que si les deuxième et troisième conduites 7-2 et 7-3 avaient été stockées l'une à la suite de l'autre, c'est-à-dire l'une par-dessus l'autre dans un même compartiment entre desdits poteaux internes 9c et desdits poteaux périphériques de retenue 9a, il serait obligatoire de décharger et poser la conduite enroulée en dernier, c'est-à-dire la conduite supérieure. On n'aurait donc plus le choix, comme c'est le cas grâce à un dispositif mixte avec une pluralité de séries de poteaux intermédiaires comme selon l'invention. Sur la figure 3D, on a utilisé deux séries de poteaux intermédiaires 9c et 9b. On pourra toutefois utiliser avantageusement autant de séries de poteaux intermédiaires que nécessaire en fonction du nombre de conduites à stocker de manière à garder la plus grande souplesse possible pour leur installation sur site. Dans tous les cas de figure, il conviendra d'avoir déroulé et posé toutes les conduites stockées en mode panier tournant pour pouvoir dérouler et poser la première conduite enroulée en mode carrousel après avoir retiré les poteaux internes 9c et différents poteaux intermédiaires et poteaux périphériques de retenue 9b et 9a.

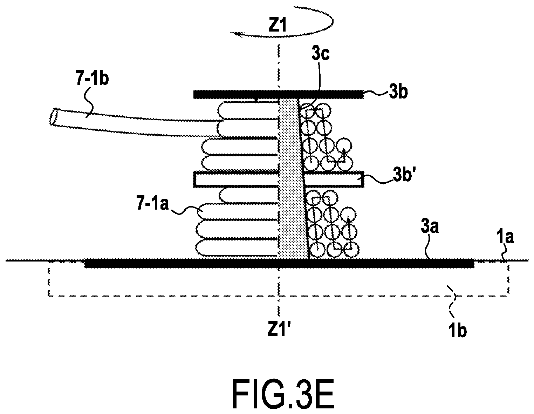

Sur la figure 3E, on a représenté une variante de réalisation dans laquelle, le fût central est équipé d'un flasque circulaire supérieur 3b à son sommet et est entouré d'un flasque circulaire intermédiaire 3b' de même diamètre à mi-hauteur, de sorte que l'on peut enrouler une première conduite 7-1a à partir du plateau tournant 3a jusqu'en sous face du flasque intermédiaire 3b', puis une deuxième première conduite 7-1b depuis le flasque intermédiaire 3b' jusqu'en sous face du flasque supérieur 3b. Dans ce cas, on peut enrouler/dérouler les deux premières conduites 7-1a et 7-1b dans n'importe quel ordre.

Sur la figure 4, on a représenté en vue de côté la pose conventionnelle par grande profondeur de conduites flexibles 7 à partir d'une série de treuils ou bobines à axe horizontal 22a-22b-22c-22d sur lequel sont enroulés des portions de conduite flexible. Une motorisation de bobine 20 est apte à coulisser sur des rails 21 et à s'ajuster successivement sur chacune des bobines 22a-22b-22c-22d, pour les soulever individuellement et les mettre en rotation successivement de manière à dévider les différentes portions de conduite flexible 7 sur laquelle elles sont enroulées. Ainsi, lorsque la première bobine 22a sur laquelle une conduite était enroulée est dévidée, on sécurise l'extrémité de ladite conduite 7. Puis, on redépose la bobine 22a vide sur son support 22-1 et on déplace la motorisation de bobine 20 sur la bobine suivante 22b et l'on connecte l'extrémité de conduite enroulée sur la deuxième bobine 22b à l'extrémité sécurisée de la conduite flexible déjà posée. Puis, on continue la pose de la conduite flexible par déroulement des différentes portions de conduite flexible sur les différentes bobines suivantes 22c-22d. Ce type de bobine 22a-22b présente en général un diamètre de 8 à 12 m et une largeur de 5 à 8m, mais ne permet de stocker que des longueurs limitées de portions de conduite, la bobine chargée pouvant peser de 350 à 750 tonnes, voire plus.

En comparaison, le stockage en mode carrousel tel que représenté figure 1 et figures 3A-3D, est avantageux dans le cas de pose de conduites de très grandes longueurs, car il permet de stocker des conduites de plus grandes longueurs et/ou de plus grands diamètres en évitant les problèmes de raccordement que l'on rencontre lorsque la conduite est stockée en plusieurs tronçons sur plusieurs bobines. Dans le cas de conduites flexibles de grand diamètre, ce stockage conventionnel sur treuils selon la figure 4 est souvent impossible, car le rayon de courbure minimal de ladite conduite flexible est très grand, notamment jusqu'à 5m voire plus, ce qui nécessiterait des bobines 22a-22d de très grande taille que l'on ne saurait alors plus manipuler. Le stockage en mode panier tournant tel que présenté figure 2 et figures 3C-3D est bien adapté aux conduites de plus grand diamètre à grand rayon minimal de courbure, car il permet d'en stocker des longueurs unitaires importantes sans risque de courbure à rayon inférieur au rayon minimal de courbure. Le stockage mixte tel que décrit en référence aux figures 3A-3C est préféré, car il permet de stocker en mode carrousel contre le fût central 3c une longueur importante de première conduite 7-1 de petit ou moyen diamètre, et en périphérie autour desdits poteaux internes 9c et deuxièmes poteaux intermédiaires 9b, une deuxième conduite 7-2, voire une troisième conduite 7-3 de longueur importante et de fort diamètre en mode panier tournant. Le diamètre du cercle le long duquel sont disposés les poteaux internes 9c constituant les éléments de support de l'enroulement de la deuxième conduite du panier tournant du dispositif mixe doit être supérieur au diamètre minimum de courbure de ladite deuxième conduite flexible 7-2, alors que le fût central 3c présenterait un diamètre trop faible, donc incompatible avec le stockage d'une telle conduite 7-2 de gros diamètre. Ce mode d'enroulement de type panier tournant est donc avantageux pour les conduites flexibles longues et de plus grand diamètre que l'on ne peut pas enrouler sur un fût de faible diamètre compte tenu de son rayon de minimum de courbure trop important.

On peut enrouler des conduites de petit ou moyen diamètre inférieur à 200 mm sur des longueurs de 1 à 200 km sur un fût 3c de 1 à 15m de diamètre et 3 à 10 m de hauteur, avec un dispositif de type carrousel de petit ou moyen diamètre. Et, avec un dispositif de type panier tournant, on peut enrouler des conduites de plus grands diamètres, notamment supérieurs à 200 mm et sur des longueurs supérieures aussi à 1 km, le cercle des poteaux internes 9c représentant un diamètre supérieur à 8 m, notamment de 12 à 30 m.

A titre d'exemple, un plateau tournant 3a de 30 m de diamètre capable de supporter une charge de 5000 tonnes permet de stocker une conduite sur une hauteur de 6m comme suit :
- en mode carrousel : 150 km de câble électrique de diamètre 150mm et de poids linéaire 25kg/ml, soit environ 76 couches de 40 spires, représentant un poids total d'environ 4000 tonnes,
- en mode panier tournant : 12.5 km de conduite flexible de diamètre 500 mm, de poids linéaire 350kg/ml et de rayon minimum de courbure R=5m, soit environ 12 couches de 18 spires, représentant un poids total d'environ 4500 tonnes
- en mode mixte selon la figure 3C :
   - en mode carrousel : 10 km d'ombilical 7-1 de diamètre 200 mm de poids linéaire 45kg/ml, soit environ 15 couches de 30 spires, représentant un poids total d'environ 450 tonnes plus,
   - en mode panier tournant : 18.5 km de conduite flexible 7-2 de diamètre 400 mm, de poids linéaire 200kg/ml et de rayon minimum de courbure R=6m, soit environ 15 couches de 20 spires, représentant un poids total d'environ 3700 tonnes, l'ensemble représentant alors un poids total d'environ 4150 tonnes.
- en mode mixte selon la figure 3D :
   - en mode carrousel : 22.5 km d'ombilical 7-1 de diamètre 100 mm de poids linéaire 15kg/ml, soit environ 20 couches de 60 spires, représentant un poids total d'environ 350 tonnes, plus
   - en mode panier tournant dans un premier corridor circulaire de diamètre de fût D1=10m et de 1m de largeur : 850m de conduite flexible de diamètre 400mm, de poids linéaire 180kg/ml et de rayon minimum de courbure R=4m, soit environ 13 couches de 2 spires, représentant un poids total d'environ 160 tonnes, plus
   - en mode panier tournant dans un deuxième corridor circulaire de diamètre de fût D2=14m et de 3m de largeur: 3900m de conduite flexible de diamètre 450mm, de poids linéaire 300kg/ml et de rayon minimum de courbure R=4m, soit environ 13 couches de 6 spires, représentant un poids total d'environ 1200 tonnes, plus
   - en mode panier tournant dans un troisième corridor circulaire de diamètre de fût D3=22m et de 2.5m de largeur: 3900m de conduite flexible de diamètre 600mm, de poids linéaire 450kg/ml et de rayon minimum de courbure R=6m, soit environ 10 couches de 5 spires, représentant un poids total d'environ 1800 tonnes, l'ensemble représentant alors un poids total d'environ 3510 tonnes.

Sur la figure 6A on a représenté un plateau tournant 3a de 30m de diamètre et de 8000t de capacité installé sur l'avant et à l'axe du pont d'un navire d'installation.

Sur la figure 6B on a représenté un plateau tournant double 3a de 20m de diamètre et de 4500t de capacité installé sur l'avant du pont d'un navire d'installation, ledit plateau double 3a étant déporté sur bâbord de manière à laisser un passage libre sur tribord lorsque ledit plateau est équipé en mode carrousel, en mode panier tournant, ou en mode mixte. Le plateau tournant double est constitué d'un premier plateau tournant interne 3a-a de diamètre ϕ₁, en forme de disque et d'un second plateau tournant externe 3a-b de forme annulaire disposés concentriquement au dit premier plateau tournant, indépendant dudit premier plateau tournant, de diamètre extérieur ϕ₂ tel que ϕ₂>ϕ₁. Les deux plateaux sont dans un même plan et sensiblement dans le plan du pont du navire. La motorisation agit sur le plateau interne 3a-a, et le second plateau 3a-b peut être soit immobilisé pendant que ledit premier plateau est entraîné en rotation, soit solidarisé à ce dernier et entraîné concomitamment en rotation avec ledit premier plateau, soit apte à être entraîné en rotation indépendamment dudit premier plateau, selon la capacité de stockage voulue. Ainsi, pour un stockage de capacité maximale, on solidarise ensemble les premier et second plateaux tournants et l'on dispose d'une capacité de stockage maximale de diamètre ϕ₂. Si l'on cherche une capacité réduite, on laisse ledit second plateau tournant immobilisé, solidarisé directement au pont du navire, et l'on n'entraîne en rotation que ledit premier plateau tournant, de sorte que l'on ne dispose alors que d'une capacité réduite correspondant au diamètre ϕ₁ du premier plateau tournant 3a-3. L'avantage de cette dernière disposition réside dans le passage libre sur le pont du navire à coté du dispositif, qui correspond alors à un vaste corridor de largeur L₂ lorsque l'on utilise seulement ledit premier plateau tournant 3a-a alors qu'il n'est que d'une largeur réduite L₁ lorsque l'on utilise le dispositif à capacité maximale, correspondant à l'ensemble du premier et second plateaux tournants. Ce corridor de dimension plus large permet d'installer des équipements complémentaires, ce qui constitue un grand avantage dans de nombreuses opérations d'installations sur les champs pétroliers en mer, en raison de la souplesse du dispositif.

Pour les opérations de pose de pipe conventionnelle avec des rames de 50m de conduite rigide 10 constituées à partir d'éléments unitaires 11 de conduite stockée sur le pont du navire et avec une tour 12 de type JLT, on peut démonter lesdits accessoires 3c-3b,9a-9b-9c et laisser en place le plateau 3a, comme présenté sur la figure 5, car il est au niveau du pont et n'interfère donc pas avec les équipements que l'on pose dessus.

Le fait que le plateau tournant 3a soit intégré dans une cavité 1b permet d'éviter une perte de temps éventuelle importante s'il fallait démonter le plateau 3a pour libérer le pont 1a.

En effet, du fait que le plateau tournant est intégré à la coque en continuité du plan avec celui du pont, il n'est pas nécessaire de le retirer lorsque l'on veut utiliser le pont pour d'autres installations, ce qui épargne d'avoir à immobiliser le bateau pendant plusieurs jours au port pour cette opération et donc représente un avantage économique important.

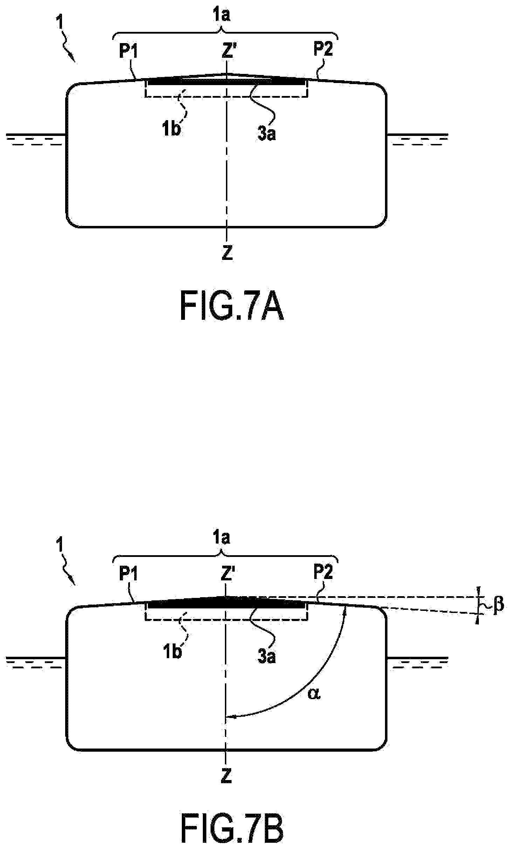

Le pont 1a d'un navire présente en général deux plans P₁ et P₂ en légère pente ß par rapport à l'horizontale, de moins de 5%, soit de 1 à 2%, vers bâbord P₁ et vers tribord P₂, à partir d'une arête centrale axiale XX', de manière à ce que l'eau de pluie ou les embruns soient dirigés vers les bordés du navire pour rejet à la mer : un tel pont ne constitue donc pas un plan en tant que tel. Ainsi, ledit plateau tournant sera de préférence plan et sera installé de telle manière qu'il ne dépasse en aucun point dudit pont du navire comme montré sur la figure 7A. Ainsi, lorsqu'il n'est pas utilisé, il existera dans certaines zones du pont un léger décalage entre ledit pont et ledit plateau tournant que l'on compensera par un calage, par exemple en bois, ledit calage redonnant au pont une continuité de surface permettant d'y installer les équipements requis. Ce calage localisé sera d'épaisseur variable selon l'emplacement et variera de 20 à 200-300 mm selon le diamètre du plateau tournant et la structure du pont du navire.

Toutefois, on réalisera avantageusement un plateau tournant non pas plan mais légèrement conique montré figure 7B, dont le demi-angle α au sommet coïncidera avec l'angle d'inclinaison des plans P₁ et P₂ du pont du navire sur bâbord et sur tribord par rapport à un axe vertical perpendiculaire à ladite arête centrale axiale XX', soit un angle α de plus de 95 grades ou un angle ß de moins de 5 grades, plus particulièrement un angle ß de 1 à 2 grades c'est-à-dire un angle au sommet 2α du cône de 98 à 99 grades. On installera alors de préférence un tel plateau tournant conique dans l'axe du navire comme montré sur la figure 6A et sur la figure 7B. Sur la figure 7B, le plateau tournant conique est disposé de telle sorte que les parties dudit plateau tournant situées de chaque côté de ladite arête centrale XX' ne dépasse pas du plan P₁ ou P₂ du pont situé du même côté de l'arête centrale XX' dans une direction perpendiculaire par rapport au dit plan du pont et le sommet dudit plateau tournant ne dépasse pas en hauteur, la hauteur de l'arête central XX' dudit pont. En d'autres termes, lesdits plans P₁ et P₂ sur bâbord et respectivement sur tribord dudit pont, sont disposés tangentiellement à chaque partie dudit plateau tournant disposé du même côté que ledit plan bâbord P₁ ou respectivement tribord P₂.

Un plateau tournant selon l'invention sera typiquement réalisé en acier et présentera un diamètre de 5 à 50 m et une épaisseur de 100 à 800 mm.

Un fût central 3c sera réalisé en tôle mécano-soudée et présentera une hauteur de 3 à 10 m avec un diamètre de 1 à 10 m pour le mode carrousel et de 5 à 15 m pour le mode panier tournant.

Le poteau ou portique 6 équipé du tensionneur à chenilles et système de trancanage sera positionné au plus près de l'extérieur du flasque supérieur 3b du carrousel en pratique à moins de 5 m, de préférence encore à moins de 1 m.

Le plateau tournant 3a sera positionné sur le pont à une distance suffisante de la tour de pose en J 12, de façon à ce que le rayon de courbure de la conduite soit supérieur au moins à 3 fois le rayon de courbure minimum toléré de la conduite dans la portion 7b s'étendant depuis ledit tensionneur à chenilles et le sommet de la tour. Ainsi, le plateau tournant 3a sera plutôt disposé plus proche du côté du navire opposé à la tour que de la tour.

Dans un mode de réalisation, le navire de pose n'est pas équipé d'une tour de pose, mais d'une goulotte, en général située sur l'arrière du navire. C'est le cas notamment pour des poses de conduites à faible profondeur, notamment inférieure à 500 m.

Dans un mode de réalisation, pour réaliser le trancanage afin que la conduite flexible arrive en permanence en tangence à la spire en cours d'enroulement ou déroulement, on préfère ne pas déplacer le tensionneur à chenilles et plutôt le faire coopérer avec un moyen de guidage tel qu'une goulotte et un bras articulé apte à se déplacer latéralement et donc dans la direction transversale (mode panier tournant = trancanage horizontal) du navire YY' ou dans la direction verticale ZZ' (mode carrousel = trancanage vertical).

Des tensionneurs à tension constante, à chenilles ou à pneus, ainsi que les systèmes de trancanage pour treuils et paniers tournants sont connus de l'homme de l'art, notamment commercialisés par la Société HUISMAN (Hollande).

## Revendications

1. Navire de pose en mer (1) de conduites sous-marines souples comprenant un pont (1a) comprenant une cavité (1b) dans laquelle sont disposés ledit plateau tournant (3a) et un dispositif de support et de rotation motorisée (3a') du plateau circulaire tournant (3a), la face supérieure dudit plateau circulaire tournant (3a) ne dépassant sensiblement pas le niveau de la partie du pont (1a) qui lui est immédiatement juxtaposée latéralement, la périphérie dudit plateau tournant arrivant sensiblement au niveau dudit pont, ledit plateau tournant étant supporté par et coopérant en rotation avec des éléments (3a'-1, 3a'-2, 3a'-4, 3a'-5) du dispositif de support et de rotation (3a') au sein de ladite cavité (1b) fixés à la structure porteuse (1c, 1l) de la coque du navire, ledit plateau tournant (3a) présentant des éléments d'accrochage (4, 4a-4b) sur sa face supérieure, aptes à permettre l'accrochage de manière réversible des supports d'enroulement de conduites souples (3c, 9a, 9c) d'un dispositif de stockage et de manutention de conduite(s) souple(s) (3, 9, 12), lesdits supports d'enroulement (3c, 9c) s'étendant dans une direction (ZZ') perpendiculaire et au-dessus dudit plan du pont du navire.

2. Navire de pose selon la revendication 1, **caractérisé en ce que** ladite structure porteuse de la coque comprend au niveau de ladite cavité, des éléments de renfort supplémentaires (1l) et ledit dispositif de support et de rotation (3a') au sein de ladite cavité comprend au moins:
- un plancher (3a'-4) fixé à et supporté par desdits éléments de renfort supplémentaires (1e, 1h, 1k) de ladite structure porteuse de la coque en sous face dudit plancher, et
- des éléments de guidage en rotation (3a'-3) supportés par ledit plancher, et un arbre de rotation (3a'-5) supporté par des éléments de renfort supplémentaires (1h) de ladite structure porteuse de la coque en sous face dudit plancher, et
- un moteur (3a'-1) et des éléments d'entrainement en rotation (3a'-2) du plateau et dudit arbre de rotation par actionnement dudit moteur, supportés par ladite structure porteuse de la coque au sein et en périphérie de ladite cavité.

3. Navire de pose (1) selon la revendication 2, **caractérisé en ce que** lesdits éléments d'accrochage comprennent des rainures (4a) et/ou des trous (4b) disposés sur la surface du plateau tournant circulairement et radialement à différentes distances radiales par rapport à l'axe central (Z₁Z₁') de rotation dudit plateau tournant.

4. Navire de pose (1) selon l'une des revendications 1 à 3, **caractérisé en ce qu'**il supporte un dispositif de stockage et manutention modulaire (3, 9) de conduite souple par enroulement et déroulement de conduite souple comprenant :
a) un dit plateau tournant (3a) supportant desdits accessoires (3c, 9a, 9c) sur sa face supérieure qui y sont accrochés de manière réversible aux dits éléments d'accrochage, lesdits accessoires formant ainsi un ou des supports d'enroulement (3c, 9c) s'étendant dans la direction perpendiculaire (ZZ') et au-dessus dudit plan dudit pont du navire, lesdits supports d'enroulement (3c, 9c) étant disposés circulairement par rapport à l'axe central (Z₁Z₁') de rotation dudit plateau tournant, sur la face supérieure dudit plateau tournant, et,
b) un dispositif de trancanage (2) comportant :
- un dispositif de guidage et de maintien (5) de conduite souple monté sur un deuxième élément de support (6) formant un poteau, une tour ou un portique (6) s'étendant au moins dans une direction perpendiculaire au-dessus du pont du navire à proximité (1b') dudit plateau tournant comportant des moyens motorisés (2a) de déplacement d'une première portion de conduite souple (7a) s'étendant entre ledit dispositif de guidage et de maintien (3, 9) et ledit dispositif de stockage et de manutention (5) apte à permettre le déplacement relatif vertical et horizontal de ladite portion de conduite souple (7a) par rapport au dit deuxième élément de support (6) pour permettre le trancanage de ladite conduite souple (7) autour et contre desdits supports d'enroulement (3c, 9c).

5. Navire de pose (1) selon la revendication 4, **caractérisé en ce que** le dispositif de stockage et de manutention, de conduite souple est du type dénommé carrousel (3) comprenant :
a) un support d'enroulement à paroi continue en forme de fût central cylindrique ou cylindro-tronconique (3c) disposé coaxialement (Z₁Z₁') au dit plateau tournant (3a), ledit fût étant surmonté d'au moins un flasque circulaire supérieur (3b) à son sommet, et
b) un dispositif de trancanage (2) apte à permettre le trancanage de ladite conduite souple (7) autour et contre ledit fût central (3c) en mode dit carrousel, comprenant un dispositif de traction (5) de la conduite apte à tensionner ladite première portion de conduite (7a) s'étendant entre ledit dispositif de traction (5) et la partie de conduite déjà enroulée ou encore enroulée, et des moyens aptes à déplacer verticalement ladite première portion conduite souple (7a) tensionnée de manière à la maintenir au fur et à mesure de son enroulement ou déroulement, sensiblement horizontalement pour permettre le trancanage de la conduite en plusieurs couches coaxiales (7₁, 7₂, 7₃) de spires jointives et son déroulement, ladite conduite souple étant ainsi enroulée ou apte à être enroulée en mode dit carrousel, en plusieurs couches telles que les spires (7₁-1 à 7₁-n, 7₂-1 à 7₂-n, 7₃-1 à 7₃-n) d'une même couche (7₁, 7₂, 7₃) soient superposées hélicoïdalement, les différentes couches (7₁, 7₂, 7₃) formant des colonnes cylindriques coaxiales juxtaposées.

6. Navire de pose (1) selon la revendication 4, **caractérisé en ce que** le dispositif de stockage et de manutention de conduite souple est du type dénommé panier tournant (9), comprenant :
a) une pluralité de supports d'enroulement en forme de poteaux internes (9c) disposés circulairement par rapport à l'axe central de rotation (Z₁Z₁') dudit plateau tournant (3a) ou un fût central cylindrique ou cylindro-tronconique (3c) disposé coaxialement audit plateau tournant, et des éléments de retenue périphériques (9a) s'étendant dans la direction perpendiculaire (ZZ') au-dessus dudit pont du navire, disposés circulairement par rapport à l'axe central (Z₁Z₁') de rotation dudit plateau tournant, sur la face supérieure dudit plateau tournant, et
b) un dispositif de trancanage (2) apte à permettre le trancanage de ladite conduite souple (7) autour et contre ledit fût central (3c) ou ladite pluralité de poteaux internes (9c) en mode dit panier tournant, comprenant un dispositif de maintien et de guidage (5) de la conduite, et des moyens aptes à déplacer en translation horizontale dans une direction transversale perpendiculaire (YY') au dit axe central vertical de rotation (Z₁Z₁'), la première portion de conduite souple (7a) s'étendant en position inclinée entre ledit dispositif de maintien et de guidage et la conduite (7) déjà enroulée ou encore enroulée, pour permettre le trancanage de la conduite en plusieurs couches superposées (7₁, 7₂, 7₃) de spires jointives et son déroulement, la conduite souple étant ainsi enroulée ou apte à être enroulée en mode dit du type panier tournant, sur plusieurs couches superposées telles que les spires (7₁-1 à 7₁-n, 7₂-1 à 7₂-n, 7₃-1 à 7₃-n) d'une même couche soient juxtaposées concentriquement reposant sur un même plan et de diamètres croissants depuis la première spire (7₁-1, 7₂-1, 7₃-1) appliquée contre le ou les supports d'enroulement (3c, 9c) jusqu'à la dernière spire (7₁-n, 7₂-n, 7₃-n) venant buter contre lesdits poteaux périphériques (9a), ladite portion de conduite (7a) s'étendant entre le dispositif de maintien et de guidage (5) et la conduite déjà enroulée ou encore enroulée, n'étant pas tensionnée par ledit dispositif de maintien et de guidage (5) celui-ci étant maintenu à hauteur constante au dessus des extrémités supérieures desdits supports d'enroulement (3c, 9c) et poteaux de retenue (9a).

7. Navire de pose (1) selon l'une des revendications 4 à 6, **caractérisé en ce que** le dispositif de stockage et manutention (20) de conduite souple est du type mixte carrousel/panier tournant apte à stocker et manutentionner au moins deux conduites souples comprenant :
- un premier support d'enroulement d'une première conduite (7-1), ledit premier support d'enroulement étant à paroi continue en forme de fût central cylindrique ou cylindro-tronconique (3c) disposé coaxialement audit plateau tournant,
- une pluralité de deuxièmes supports d'enroulement d'une deuxième conduite (7-2) en forme de poteaux internes (9c) disposés circulairement par rapport à l'axe central de rotation (Z₁Z₁') dudit plateau à distance radiale constante dudit fût central, et
- des éléments de retenue périphériques en forme de poteaux (9a) s'étendant dans la direction perpendiculaire (ZZ') au-dessus dudit plan dudit pont navire, disposés circulairement par rapport à l'axe central (Z₁Z₁') de rotation dudit plateau tournant, et en périphérie dudit plateau tournant,
- ledit fût central étant surmonté d'un flasque circulaire supérieur (3b) à son sommet de diamètre tel que lesdits poteaux internes d'enroulement de la deuxième conduite sont solidarisés entre eux à leurs sommets par fixation sur la périphérie dudit flasque supérieure (3b), lesdits premier et deuxième éléments de support et dits éléments de retenue étant disposés sur la face supérieure dudit plateau tournant, et
- un dispositif de trancanage (2) comprenant au moins un deuxième élément de support (6) d'au moins un dispositif de guidage et maintien de conduite souple (5) apte à permettre le déplacement vertical et horizontal d'une dite première portion de conduite souple (7a) s'étendant entre le dispositif de guidage et de maintien (5) et la conduite déjà ou encore enroulée pour le trancanage de ladite conduite souple (7) autour et contre desdits supports d'enroulement (3c, 9c), ledit deuxième élément de support (6) formant une tour ou un portique (6) s'étendant au moins dans une direction perpendiculaire au plan (ZZ') au plan dudit et au dessus dudit pont, à proximité (1b) dudit plateau tournant,
- un dit dispositif de guidage et maintien de conduite souple (5) étant apte à permettre le trancanage d'une première conduite souple (7-1) autour et contre ledit fût central (3) en mode dit carrousel, comprenant un dispositif de traction (5) de la conduite apte à tensionner la portion de première conduite (7a) s'étendant entre le dispositif de traction et la première conduite déjà enroulée ou encore enroulée, ledit dispositif de traction (5) étant un tensionneur à chenilles, et des moyens apte à déplacer verticalement ladite première portion de première conduite souple (7a) s'étendant entre le dispositif de traction et la première conduite déjà enroulée ou encore enroulée, pour que celle-ci puisse être tensionnée et maintenue sensiblement horizontalement par ledit dispositif de traction (5) pour permettre le trancanage de la première conduite en plusieurs couches coaxiales (7₁, 7₂, 7₃) de spires jointives superposées, ladite première conduite souple étant ainsi enroulée ou apte à être enroulée en plusieurs couches coaxiales telles que les spires d'une même couche (7₁-1 à 7₁-n, 7₂-1 à 7₂-n, 7₃-1 à 7₃-n) sont superposées hélicoïdalement, les différentes couches formant des colonnes cylindriques coaxiales juxtaposées de sorte que deux spires (7₁-i - 7₂-i) de deux couches juxtaposées (7₁-7₂) présentent des diamètres différents, et
- un dit dispositif de guidage et maintien de conduite souple (5) étant en outre apte à permettre le trancanage d'une deuxième conduite souple (7-2) autour et contre lesdits supports d'enroulement en forme de poteaux internes (9c) en mode dit de type panier tournant, comprenant un dispositif de traction (5) de la conduite constitué d'un tensionneur à chenilles et des moyens apte à déplacer en translation horizontale dans une direction transversale perpendiculaire (YY') au dit axe central de rotation (Z₁Z₁'), ladite première portion de deuxième conduite souple (7a) s'étendant en position inclinée entre le dispositif de maintien et de guidage et la deuxième conduite déjà enroulée ou encore enroulée, pour permettre le trancanage de ladite deuxième conduite en plusieurs couches superposées (7₁, 7₂, 7₃) de spires jointives, ladite deuxième conduite souple étant ainsi enroulée ou apte à être enroulée sur plusieurs couches superposées telles que les spires d'une même couche (7₁-1 à 7₁-n, 7₂-1 à 7₂-n, 7₃-1 à 7₃-n) soient juxtaposées concentriquement reposant sur un même plan et de diamètres croissants depuis la première spire (7₁-1, 7₂-1, 7₃-1) appliquée contre lesdits supports d'enroulement en forme de poteaux internes (9c) jusqu'à la dernière spire (7₁-n, 7₂-n, 7₃-n) venant buter contre lesdits poteaux périphériques de retenue (9a), ladite première portion (7a) de deuxième conduite n'étant pas tensionnée par ledit dispositif de maintien et de guidage (5) celui-ci étant maintenue à hauteur constante au dessus de desdits supports d'enroulement (3c, 9c) et poteaux de retenue (9a).

8. Navire de pose (1) selon la revendication 7, **caractérisé en ce qu'**il comprend un seul dispositif de guidage et maintien (5) de conduite apte à être déplacé verticalement ou horizontalement à hauteur constante en déplacement relatif par rapport à un deuxième élément de support (6) dudit dispositif de guidage et maintien de conduite souple (5), ledit deuxième élément support comprenant un portique (6).

9. Navire de pose (1) selon l'une des revendications 7 ou 8, **caractérisé en ce que** deux conduites souples sont enroulées sur le dispositif de stockage et manutention mixte comprenant :
- une dite première conduite (7-1) de plus petit diamètre enroulée sur un dit fût central en mode carrousel, et
- une deuxième conduite souple (7-2) de plus grand diamètre enroulée en mode panier tournant autour desdits poteaux internes (9c).

10. Navire selon l'une des revendications 7 à 9, **caractérisé en ce que** ledit plateau tournant est constitué de deux parties concentriques comprenant :
- un premier plateau tournant interne en forme de disque (3a-a) apte à être entraîné en rotation, et
- un deuxième plateau tournant externe de forme annulaire (3a-b) concentrique au dit premier plateau tournant et disposé autour dudit premier plateau tournant, ledit deuxième plateau tournant étant apte à être maintenu immobilisé ou entraîné en rotation concomitamment au dit premier plateau tournant, lorsque ledit premier plateau tournant est entraîné en rotation.

11. Navire de pose selon l'une des revendications 1 à 10, **caractérisé en ce que** la face supérieure dudit plateau tournant (3a) est plane et arrive sensiblement au niveau du plan dudit pont autour dudit plateau tournant.

12. Navire de pose selon l'une des revendications 1 à 10, **caractérisé en ce que** la face supérieur dudit plateau tournant est de forme conique, centrée dans l'axe longitudinal médian (XX') du navire, présentant un demi-angle au sommet (α) supérieur à 95 grades, de demi-angle au sommet (α) de valeur sensiblement identique à l'angle d'inclinaison par rapport à la verticale des deux parties planes (P₁, P₂) du pont du navire, respectivement en légère pente (ß) par rapport à l'horizontale vers tribord (P₂) et bâbord (P₁) à partir d'une arête centrale disposée le long de ladite direction longitudinale axiale médiane (XX') du navire.

13. Navire de pose de conduite en mer (1) selon l'une des revendications 1 à 12, **caractérisé en ce que** ledit navire comporte en outre une tour de pose en J (12) et au moins une dite conduite souple (7,7') enroulée autour d'un dit dispositif de stockage et manutention (3, 9, 12) comportant un dispositif de maintien et de guidage de portion de conduite (7a) s'étendant entre ledit dispositif de maintien et de guidage et la conduite enroulée, ladite conduite comportant une deuxième portion de conduite courbée (7b) en forme de chainette soumise à la tension de son seul poids propre s'étendant entre ledit dispositif de maintien et de guidage (5) et une poulie (8) disposée à une hauteur supérieure sur la tour (12) et une troisième portion de conduite (7c) s'étendant rectilignement dans la tour étant tensionnée à l'aide d'un deuxième dispositif de traction (2b) solidaire de ladite tour de pose en J (12).

14. Navire selon l'une des revendications 1 à 13, **caractérisé en ce que** ladite conduite souple est une conduite flexible sous marine (1).

15. Procédé de pose d'une conduite souple (7, 7-1, 7-2) en mer depuis un navire (1) selon la revendication 13 ou 14, **caractérisé en ce qu'**on réalise les étapes suivantes :
1) on déplace le navire de manière synchronisée avec le défilement de la conduite au niveau dudit deuxième dispositif de traction au sein de la tour de pose en J (12), et
2) on déroule ladite conduite en actionnant de manière synchronisée la rotation dudit plateau tournant, et le déplacement de ladite première portion de conduite (7a) s'étendant entre ledit dispositif de maintien et de guidage (5) et la conduite enroulée, de manière à maintenir la courbure de ladite portion de conduite (7b) s'étendant entre ledit dispositif de maintien et de guidage (5) et ladite poulie (8) disposée à une hauteur supérieure sur la tour(2), avec une courbure en chainette dont la courbure est en tous points supérieure à la courbure minimale acceptable de la conduite souple et telle que de préférence ladite portion de conduite en chainette ne touche pas le pont (1a) du navire.

16. Procédé selon la revendication 15, **caractérisé en ce que** l'on déroule une dite conduite souple enroulée en mode carrousel en exerçant une tension sensiblement constante sur ladite première portion (7a) de conduite s'étendant sensiblement horizontalement entre le dispositif de maintien et de guidage de conduite et la conduite enroulée sur un dit fût central.

17. Procédé selon la revendication 15, **caractérisé en ce que** l'on déroule une dite conduite souple enroulée en mode panier tournant sans exercer de tension sur ladite première portion (7a) de conduite s'étendant en position inclinée entre le dispositif de maintien et de guidage de conduite et la conduite enroulée, en synchronisant la vitesse de défilement de la conduite et la vitesse de rotation dudit plateau tournant.

18. Procédé selon l'une des revendications 15 à 17, **caractérisé en ce que** l'on met en oeuvre un dispositif de stockage et manutention de type mixte avec :
- une dite première conduite (7-1) de plus petit diamètre enroulée sur un dit fût central en mode carrousel, et
- une deuxième conduite souple (7-2) enroulée en mode panier tournant sur desdits poteaux internes (9c) et retenus par desdits poteaux périphériques de retenue (9a),
ledit procédé étant **caractérisé en ce que** l'on réalise les étapes successives suivantes :
1) on déroule et on pose en mer ladite deuxième conduite (7-2), puis
2) on démonte lesdits poteaux internes (9c) et dits poteaux périphériques de retenue (9a) et,
3) on effectue le déroulement et la pose en mer de ladite première conduite.

## Patentansprüche

1. Verlegeschiff (1) für biegsame Unterwasserleitungen, das eine Brücke (1a) umfasst, die einen Hohlraum (1 b) umfasst, in dem die Drehplatte (3a) und eine motorisierte Stütz- und Rotationsvorrichtung (3a') der kreisförmigen Drehplatte (3a) angeordnet sind, wobei die obere Seite der kreisförmigen Drehplatte (3a) das Niveau des Teils der Brücke (1a), das unmittelbar seitlich neben ihr liegt, im Wesentlichen nicht überschreitet, wobei der Umfang der Drehplatte im Wesentlichen das Niveau der Brücke erreicht, wobei die Drehplatte von Elementen (3a'-1, 3a'-2, 3a'-4, 3a'-5) der Stütz- und Rotationsvorrichtung (3a') innerhalb des Hohlraums (1b) getragen wird und damit zusammenwirkt, die an der Tragstruktur (1c, 1l) des Schiffsrumpfs befestigt sind, wobei die Drehplatte (3a) Anhängelemente (4, 4a-4b) auf ihrer oberen Seite aufweist, die geeignet sind, um das Anhängen auf umkehrbare Art der Aufrollträger biegsamer Leitungen (3c, 9a, 9c) einer Lager- und Handhabungsvorrichtung biegsamer Leitung(en) (3, 9, 12) zu erlauben, wobei sich die Aufrollträger (3c, 9c) in eine Richtung (ZZ') senkrecht und oberhalb der Ebene der Brücke des Schiffs erstrecken.

2. Verlegeschiff gemäß Anspruch 1, **dadurch gekennzeichnet, dass** die Tragstruktur des Rumpfs im Bereich des Hohlraums zusätzliche Verstärkungselemente (1l) umfasst, und dass die Stütz- und Rotationsvorrichtung (3a') innerhalb des Hohlraums mindestens umfasst:
- einen Boden (3a'-4), der an den zusätzlichen Verstärkungselementen (1 e, 1 h, 1 k) der Tragstruktur des Rumpfs auf der Unterseite des Bodens befestigt ist und von ihnen getragen wird, und
- Führungselemente (3a'-3), die von dem Boden getragen werden, und eine Rotationswelle (3a'-5), die von zusätzlichen Verstärkungselementen (1 h) der Tragstruktur des Rumpfs auf der Unterseite des Bodens getragen wird, und
- einen Motor (3a'-1) sowie Elemente zum Antreiben in Drehung (3a'-2) der Platte und der Rotationswelle durch Betätigen des Motors, die von der Tragstruktur des Rumpfs innerhalb und am Umfang des Hohlraums getragen werden.

3. Verlegeschiff (1) gemäß Anspruch 2, **dadurch gekennzeichnet, dass** die Anhängelemente Nuten (4a) und/oder Bohrungen (4b) umfassen, die auf der Oberfläche der Drehplatte kreisförmig und radial an unterschiedlichen radialen Entfernungen in Bezug zu der zentralen Rotationsachse (Z₁Z₁') der Drehplatte angeordnet sind.

4. Verlegeschiff (1) gemäß einem der Ansprüche 1 bis 3, **dadurch gekennzeichnet, dass** es eine modulare Lager- und Handhabungsvorrichtung (3, 9) zum biegsamen Führen durch Aufrollen und Abrollen biegsamer Leitung trägt, umfassend:
a) eine Drehplatte (3a), die Zubehörteile (3c, 9a, 9c) auf ihrer oberen Seite trägt, die umkehrbar an den Anhängelementen angehängt sind, wobei die Zubehörteile daher einen oder mehrere Aufrollträger (3c, 9c) bilden, die sich in die senkrechte Richtung (ZZ') und oberhalb der Ebene der Brücke des Schiffs erstrecken, wobei die Aufrollträger (3c, 9c) kreisförmig in Bezug zu der zentralen Rotationsachse (Z₁Z₁') der Drehplatte auf der oberen Seite der Drehplatte angeordnet sind, und
b) eine Spulvorrichtung (2), umfassend:
- eine Führungs- und Haltevorrichtung (5) für biegsame Leitung, die auf ein zweites Stützelement (6) montiert ist, das einen Pfosten, einen Turm oder ein Portal (6) bildet, der/das sich mindestens in eine Richtung senkrecht oberhalb der Brücke des Schiffs in der Nähe (1b') der Drehplatte erstreckt, umfassend motorisierte Mittel (2a) zum Bewegen eines ersten Abschnitts biegsamer Leitung (7a), der sich zwischen der Führungs- und Haltevorrichtung (3, 9) erstreckt, und der Lager- und Handhabungsvorrichtung (5), geeignet, um das relative vertikale und horizontale Bewegen des Abschnitts biegsamer Leitung (7a) in Bezug zu dem zweiten Stützelement (6) zu erlauben, um das Spulen der biegsamen Leitung (7) um und gegen die Aufrollträger (3c, 9c) zu erlauben.

5. Verlegeschiff (1) gemäß Anspruch 4, **dadurch gekennzeichnet, dass** die Lager- und Handhabungsvorrichtung für biegsame Leitung des Karussell (3) genannten Typs ist, umfassend:
a) einen Aufrollträger mit ununterbrochener Wand in Form eines zentralen zylindrischen oder zylindrisch-kegelstumpfförmigen Schafts (3c), der koaxial (Z₁Z₁') zu der Drehplatte (3a) angeordnet ist, wobei oberhalb des Schafts mindestens ein oberer kreisförmiger Flansch (3b) an seinem Scheitel liegt, und
b) eine Spulvorrichtung (2), die geeignet ist, um das Spulen der biegsamen Leitung (7) um und gegen den zentralen Schaft (3c) im sogenannten Karussellmodus zu erlauben, umfassend eine Zugvorrichtung (5) der Leitung, die geeignet ist, den ersten Abschnitt biegsamer Leitung (7a) zu spannen, der sich zwischen der Zugvorrichtung (5) und dem bereits aufgerollten oder noch aufgerollten Teil der Leitung erstreckt, und Mittel, die geeignet sind, um den ersten Abschnitt biegsamer Leitung (7a), derart gespannt zu bewegen, dass er allmählich von seines Aufrollens oder Abrollens im Wesentlichen horizontal gehalten wird, um das Spulen der Leitung in mehreren koaxialen Schichten (7₁, 7₂, 7₃) aneinander liegender Windungen und sein Abrollen zu erlauben, wobei die biegsame Leitung daher im sogenannten Karussellmodus in mehreren Schichten derart aufgerollt wird oder aufgerollt werden kann, dass die Windungen (7₁-1 bis 7₁-n, 7₁-1 bis 7₂-n, 7₃-1 bis 7₃-n) ein und derselben Schicht (7₁, 7₂, 7₃) schraubenförmig übereinander gelagert sind, wobei die unterschiedlichen Schichten (7₁, 7₂, 7₃) zylindrische koaxiale nebeneinander liegende Säulen bilden.

6. Verlegeschiff (1) gemäß Anspruch 4, **dadurch gekennzeichnet, dass** die Lager- und Handhabungsvorrichtung für biegsame Leitung des Typs ist, der Drehkorb (9) genannt wird, umfassend:
a) eine Vielzahl von Aufrollträgern in Form interner Pfosten (9c), die kreisförmig in Bezug zu der zentralen Rotationsachse (Z₁Z₁') der Drehplatte (3a) angeordnet sind, oder einen zentralen zylindrischen oder zylindrisch-kegelstumpfförmigen Schaft (3c), der koaxial zu der Drehplatte angeordnet ist, sowie umfängliche Rückhalteelemente (9a), die sich in die senkrechte Richtung (ZZ') oberhalb der Brücke des Schiffs erstrecken, die kreisförmig in Bezug zu der zentralen Rotationsachse (Z₁Z₁') der Drehplatte auf der oberen Seite der Drehplatte angeordnet sind, und
b) eine Spulvorrichtung (2), die geeignet ist, um das Spulen der biegsamen Leitung (7) um und gegen den zentralen Schaft (3c) oder die Vielzahl interner Pfosten (9c) im sogenannten Drehkorbmodus zu spulen, umfassend eine Halte- und Führungsvorrichtung (5) der Leitung sowie Mittel, die geeignet sind, um in horizontaler Verschiebung in eine senkrechte Querrichtung (YY') zu der zentralen Rotationsachse (Z₁Z₁') den ersten Abschnitt biegsamer Leitung (7a) zu verlagern, der sich in geneigter Position zwischen der Halte- und Führungsvorrichtung und der bereits oder noch aufgerollten Leitung (7) erstreckt, um das Spulen der Leitung in mehreren übereinander gelagerten Schichten (7₁, 7₂, 7₃) aneinander liegender Windungen und ihr Abwickeln zu erlauben, wobei die biegsame Leitung daher im sogenannten Drehkorbmodus auf mehreren übereinander gelagerten Schichten aufgerollt wird oder aufgerollt werden kann, so dass die Windungen (7₁-1 bis 7₁-n, 7₂-1 bis 7₂-n, 7₃-1 bis 7₃-n) ein und derselben Schicht konzentrisch nebeneinander liegen und auf ein und derselben Ebene und mit zunehmenden Durchmessern von der ersten Windung (7₁-1, 2 und 70-1, 7₃-1), die gegen den oder die Aufrollträger (3c, 9c) angelegt wird, bis zu der letzten Windung (7₁-n 7₂-n, 7₃-n), die gegen die umfänglichen Pfosten (9a) anschlägt, ruhen, wobei der Leitungsabschnitt (7a), der sich zwischen der Halte- und Führungsvorrichtung (5) und der bereits oder noch aufgerollten Leitung erstreckt, nicht von der Halte- und Führungsvorrichtung (5) gespannt wird, wobei diese auf konstanter Höhe oberhalb der oberen Enden der Aufrollträger (3c, 9c) und Haltepfosten (9a) gehalten wird.

7. Verlegeschiff (1) gemäß einem der Ansprüche 4 bis 6, **dadurch gekennzeichnet, dass** die Lager- und Handhabungsvorrichtung (20) für biegsame Leitung des gemischten Typs Karussell/Drehkorb ist, der geeignet ist, um mindestens zwei biegsame Leitungen zu lagern und zu handhaben, umfassend:
- einen ersten Aufrollträger einer ersten Leitung (7-1), wobei der erste Aufrollträger kontinuierliche Wand in Form eines zentralen zylindrischen oder zylindrisch-kegelstumpfförmigen Schafts (3c), der koaxial zu der Drehplatte angeordnet ist, hat,
- eine Vielzahl zweiter Aufrollträger einer zweiten Leitung (7-2) in Form interner Pfosten (9c), die kreisförmig in Bezug zu der zentralen Rotationsachse (Z₁Z₁') der Platte in konstanter radialer Entfernung von dem zentralen Schaft angeordnet sind, und
- umfängliche Rückhalteelemente in Form von Pfosten (9a), die sich in die senkrechte Richtung (ZZ') oberhalb der Ebene der Brücke des Schiffs erstrecken, die kreisförmig in Bezug zu der zentralen Rotationsachse (Z₁Z₁') der Drehplatte und am Umfang der Drehplatte angeordnet sind,
- wobei oberhalb des zentralen Schaft ein kreisförmiger oberer Flansch (3b) an seinem Scheitel mit einem Durchmesser derart liegt, dass die internen Aufrollpfosten der zweiten Leitung untereinander an ihren Scheiteln durch Befestigung auf dem Umfang des oberen Flansch (3b) fest verbunden sind, wobei die ersten und zweiten Stützelemente und die Rückhalteelemente auf der oberen Seite der Drehplatte angeordnet sind, und
- eine Spulvorrichtung (2), umfassend mindestens ein zweites Tragelement (6) mindestens einer Führungs- und Haltevorrichtung für biegsame Leitung (5), die geeignet ist, um das vertikale und horizontale Bewegen eines ersten Abschnitts biegsamer Leitung (7a), der sich zwischen der Führungs- und Haltevorrichtung (5) und der bereits oder noch aufgerollten Leitung erstreckt, für das Spulen der biegsamen Leitung (7) um und gegen die Aufrollträger (3c, 9c) zu erlauben, wobei das zweite Tragelement (6) einen Turm oder ein Portal (6) bildet, der/das sich mindestens in eine Richtung senkrecht zu der Ebene (ZZ') zur Ebene der Brücke und oberhalb dieser in der Nähe (1 b) der Drehplatte erstreckt,
- eine Führungs- und Haltevorrichtung für biegsame Leitung (5), die geeignet ist, um das Spulen einer ersten biegsamen Leitung (7-1) um und gegen den zentralen Schaft (3) im sogenannten Karussellmodus zu erlauben, die eine Zugvorrichtung (5) der biegsamen Leitung, die zu spannen ist, umfasst, wobei sich der erste Leitungsabschnitt (7a) zwischen der Zugvorrichtung und der ersten Leitung, die bereits aufgerollt oder noch aufgerollt ist, erstreckt, wobei die Zugvorrichtung (5) eine Raupenspannvorrichtung ist, und Mittel, die geeignet sind, um den ersten Abschnitt erster biegsamer Leitung (7a), der sich zwischen der Zugvorrichtung und der bereits aufgerollten oder noch aufgerollten ersten Leitung erstreckt, vertikal zu bewegen, so dass diese gespannt und von der Zugvorrichtung (5) im Wesentlichen horizontal gehalten werden kann, um das Spulen der ersten Leitung in mehreren koaxialen Schichten (7₁, 7₂, 7₃) übereinander gelagerter aneinander liegender Windungen zu erlauben, wobei die erste biegsame Leitung daher in mehreren koaxialen Schichten aufgerollt wird oder aufgerollt werden kann, so dass die Windungen ein und derselben Schicht (7₁-1 bis 7₁-n, 7₂-1 bis 7₂-n, 7₃-1 bis 7₃-n) schraubenförmig überlagert sind, wobei die unterschiedlichen Schichten nebeneinander liegende koaxiale zylindrische Säulen derart bilden, dass zwei Windungen (7₁-i - 7₂-i) von zwei nebeneinander liegenden Schichten (7₁-7₂) unterschiedliche Durchmesser aufweisen, und
- eine Führungs- und Haltevorrichtung (5) für biegsame Leitung, die außerdem geeignet ist, um das Spulen einer zweiten biegsamen Leitung (7-2) um und gegen die Aufrollträger in Form interner Pfosten (9c) in Modus des sogenannten Drehkorbtyps zu erlauben, umfassend eine Zugvorrichtung (5) für die Leitung, die aus einer Raupenspannvorrichtung und Mitteln besteht, die geeignet sind, um in horizontaler Verschiebung in eine senkrechte Querrichtung (YY') zu der zentralen Rotationsachse (Z₁Z₁') den ersten Abschnitt zweiter Leitungen (7a), der sich in geneigter Position zwischen der Halte- und Führungsvorrichtung und der zweiten Leitung, die bereits aufgerollt oder noch aufgerollt ist, erstreckt, zu bewegen, um das Spulen der zweiten Leitung in mehreren übereinander liegenden Schichten (7₁, 7₂, 7₃) aneinander liegender Windungen zu erlauben, wobei die zweite biegsame Leitung daher auf mehreren übereinander liegenden Schichten aufgerollt wird oder aufgerollt werden kann, so dass die Windungen ein und derselben Schicht (7₁-1 bis 7₁-n, 7₂-1 bis 7₂-n, 7₃-1 bis 7₃-n) konzentrisch nebeneinander liegen und auf derselben Ebene und mit Durchmessern, die von der ersten Windung (7₁-1, 7₂-1, und 7₃), die gegen die Aufrollträger in Form interner Pfosten (9c) angelegt sind, bis zu der letzten Windung (7₁-n, 7₂-n, 7₃-n) zunehmen, die gegen die umfänglichen Haltepfosten (9a) anschlagen, ruhen wobei der erste Abschnitt (7a) zweiter Leitung nicht von der Halte- und Führungsvorrichtung (5) gespannt wird, wobei diese in konstanter Höhe oberhalb der Aufrollträger (3c, 9c) und Haltepfosten (9a) gehalten wird.

8. Verlegeschiff (1) gemäß Anspruch 7, **dadurch gekennzeichnet, dass** es eine einzige Führungs- und Haltevorrichtung (5) für Leitung umfasst, die geeignet ist, um vertikal oder horizontal in konstanter Höhe in Bewegung in Bezug zu einem zweiten Tragelement (6) der Führungs- und Haltevorrichtung für biegsame Leitung (5) bewegt zu werden, wobei das zweite Tragelement ein Portal (6) umfasst.

9. Verlegeschiff (7) gemäß einem der Ansprüche 7 oder 8, **dadurch gekennzeichnet, dass** die zwei biegsamen Leitungen auf der gemischten Lager- und Handhabungsvorrichtung aufgerollt sind, umfassend:
- eine erste Leitung (7-1) mit kleinerem Durchmesser, die auf einem zentralen Schaft im Karussellmodus aufgerollt ist, und
- eine zweite biegsame Leitung (7-2) mit größerem Durchmesser, die im Drehkorbmodus um die internen Pfosten (9c) aufgerollt ist.

10. Schiff gemäß einem der Ansprüche 7 bis 9, **dadurch gekennzeichnet, dass** die Drehplatte aus zwei konzentrischen Teilen besteht, umfassend:
- eine erste interne Drehplatte in Scheibenform (3a-a), die geeignet ist, um in Drehung angetrieben zu werden, und
- eine zweite externe Drehplatte in Ringform (3a-b) konzentrisch zu der ersten Drehplatte und um die erste Drehplatte angeordnet, wobei die zweite Drehplatte geeignet ist, übereinstimmend mit der ersten Drehplatte still gehalten oder angetrieben zu werden, wenn die erste Drehplatte in Drehung angetrieben wird.

11. Verlegeschiff gemäß einem der Ansprüche 1 bis 10, **dadurch gekennzeichnet, dass** die obere Seite der Drehplatte (3a) eben ist und im Wesentlichen das Niveau der Ebene der Brücke um die Drehplatte erreicht.

12. Verlegeschiff gemäß einem der Ansprüche 1 bis 10, **dadurch gekennzeichnet, dass** die obere Seite der Drehplatte Kegelform hat, die in der mittleren Längsachse (XX') des Schiffs zentriert ist, indem sie einen Halbwinkel am Scheitel (α) größer als 95 Grad aufweist, Halbwinkel am Scheitel (α) mit Wert, der im Wesentlichen mit dem Neigungswinkel in Bezug zu der Senkrechten der zwei ebenen Teile (P₁, P₂) der Brücke des Schiffs identisch ist, jeweils mit leichtem Gefälle (β) in Bezug zu der Horizontalen nach Steuerbord (P₂) und Backbord (P₁) ausgehend von einer zentralen Kante, die entlang der mittleren axialen Längsrichtung (XX') des Schiffs angeordnet ist.

13. Verlegeschiff für Leitung auf See (1) gemäß einem der Ansprüche 1 bis 12, **dadurch gekennzeichnet, dass** das Schiff außerdem einen Verlegeturm in J (12) und mindestens eine biegsame Leitung (7, 7'), die um eine Lager- und Handhabungsvorrichtung (3, 9, 12) aufgerollt ist, umfasst, umfassend eine Halte- und Führungsvorrichtung für Leitungsabschnitt (7a), der sich zwischen der Halte- und Führungsvorrichtung und der aufgerollten Leitung erstreckt, wobei die Leitung einen zweiten Abschnitt gebogene Leitung (7b) in Steigleitung umfasst, der allein der Spannung seines eigenen Gewichts unterliegt, der sich zwischen der Halte- und Führungsvorrichtung (5) erstreckt, und eine Scheibe (8), die in einer höheren Höhe auf dem Turm (12) angeordnet ist, und einen dritten Leitungsabschnitt (7c), der sich geradlinig in dem Turm erstreckt, indem er mit Hilfe einer zweiten Zugvorrichtung (2b), die fest mit dem Verlegeturm in J (12) verbunden ist, gespannt wird.

14. Schiff gemäß einem der Ansprüche 1 bis 13, **dadurch gekennzeichnet, dass** die biegsame Leitung eine biegsame Unterwasserleitung (1) ist.

15. Verfahren zum Verlegen einer biegsamen Leitung (7, 7-1, 7-2) auf See ausgehend von einem Schiff (1) gemäß Anspruch 13 oder 14, **dadurch gekennzeichnet, dass** man die folgenden Schritte ausführt:
1) Bewegen des Schiffs synchronisiert mit dem Ablaufen der Leitung im Bereich der zweiten Zugvorrichtung innerhalb des Verlegeturms in J (12), und
2) Abrollen der Leitung unter Betätigen auf synchronisierte Art der Drehung der Drehplatte, und Bewegen des ersten Leitungsabschnitts (7a), der sich zwischen der Halte- und Führungsvorrichtung (5) und der aufgerollten Leitung erstreckt, derart, dass die Krümmung des Leitungsabschnitts (7b), der sich zwischen der Halte- und Führungsvorrichtung (5) erstreckt, und der Scheibe (8), die in einer höheren Höhe auf dem Turm (2) angeordnet ist, mit einer Krümmung in Steigleitung erstreckt, dessen Krümmung an allen Stellen größer ist als die Mindestkrümmung, die für die biegsame Leitung akzeptabel ist, und derart, dass der Leitungsabschnitt in Steigleitung bevorzugt die Brücke (1a) des Schiffs nicht berührt.

16. Verfahren gemäß Anspruch 15, **dadurch gekennzeichnet, dass** man eine biegsame Leitung, die im Karussellmodus aufgerollt ist, abrollt, indem ein im Wesentlichen konstanter Zug auf dem ersten Leitungsabschnitt (7a) ausgeübt wird, der sich im Wesentlichen horizontal zwischen der Halte- und Führungsvorrichtung und der auf einem zentralen Schaft aufgerollten Leitung erstreckt.

17. Verfahren gemäß Anspruch 15, **dadurch gekennzeichnet, dass** man eine biegsame Leitung, die im Drehkorbmodus aufgerollt ist, abrollt, ohne Spannung auf dem ersten Leitungsabschnitt (7a), der sich in geneigter Position zwischen der Halte- und Führungsvorrichtung und der aufgerollten Leitung erstreckt, auszuüben, indem man die Ablaufgeschwindigkeit der Leitung und die Drehzahl der Drehplatte synchronisiert.

18. Verfahren gemäß einem der Ansprüche 15 bis 17, **dadurch gekennzeichnet, dass** man eine Lager- und Handhabungsvorrichtung gemischten Typs umsetzt, mit:
- einer ersten Leitung (7-1) mit kleinerem Durchmesser, die auf einem zentralen Schaft im Karussellmodus aufgerollt ist, und
- einer zweiten biegsamen Leitung (7-2), die im Drehkorbmodus auf internen Pfosten (9c) aufgerollt wird, und von den peripheren Haltepfosten (9a) zurückgehalten,
Verfahren **dadurch gekennzeichnet, dass** man die folgenden aufeinanderfolgenden Schritte ausführt:
1) Abwickeln und Verlegen auf See der zweiten Leitung (7-2), dann
2) Demontieren der internen Pfosten (9c) und der umfänglichen Haltepfosten (9a), und
3) Ausführen des Abrollens und des Verlegens auf See der ersten Leitung.

## Claims

1. A laying ship (1) for laying flexible undersea lines at sea, the ship having a deck (1a) including a cavity (1b) having arranged therein said turntable (3a) and a motor-driven support and rotation device (3a') for the circular turntable (3a), the top face of said circular turntable (3a) not projecting significantly beyond the level of the portion of the deck (1a) that is immediately juxtaposed laterally thereto, the periphery of said turntable coming level with said deck, said turntable being supported by and co-operating in rotation with elements (3a'-1, 3a'-2, 3a'-4, 3a'-5) of the support and rotation device (3a') within said cavity (1b) and fastened to the carrier structure (1c, 1ℓ) of the hull of the ship, said rotary turntable (3a) presenting attachment elements (4, 4a-4b) on its top face and suitable for enabling flexible line winding supports (3c, 9a, 9c) of a flexible line storage and handling device (3, 9, 12) to be reversibly attached thereto, said winding supports (3c, 9c) extending in a direction ZZ' perpendicular to and above said plane of the deck of the ship.

2. A laying ship according to claim 1, **characterized in that** said carrier structure of the hull includes additional reinforcing elements (1ℓ) in said cavity, and said support and rotation device (3a') within said cavity comprises at least:
• a floor (3a'-4) fastened to and supported by said additional reinforcing elements (1e, 1h, 1k) of said carrier structure of the hull under said floor;
• rotary guide elements (3a'-3) supported by said floor and a rotary shaft (3a'-5) supported by additional reinforcing elements (1h) of said carrier structure of the hull under said floor; and
• a motor (3a'-1) and rotary drive elements (3a'-2) for driving the turntable and said rotary shaft in rotation by actuating said motor, the elements being supported by said carrier structure of the hull within and at the periphery of said cavity.

3. A laying ship (1) according to claim 2, **characterized in that** said attachment elements comprise grooves (4a) and/or holes (4b) arranged circularly and radially over the surface of the turntable at different radial distances in respect of the central rotation axis (Z₁Z₁') of the turntable.

4. A laying ship (1) according to any one of claims 1 to 3, **characterized in that** it supports a modular storage and handling device (3, 9) for storing flexible line by winding and unwinding the flexible line, the device comprising:
a) a said turntable (3a) supporting said accessories (3c, 9a, 9c) on its top face, which accessories are reversibly attached to said attachment elements, said accessories thus forming one or more winding supports (3c, 9c) extending in the perpendicular direction ZZ' and above said plane of said deck of the ship, said winding supports (3c, 9c) being arranged circularly relative to the central axis of rotation Z₁Z₁' of said turntable on the top face of said turntable; and
b) a spooler device (2) comprising a flexible line guide and holder device (5) mounted on a second support element (6) forming a post, a tower, or a gantry (6) extending at least in a direction perpendicular to and above the deck of the ship in the proximity (1b') of said turntable and including motor-driven means (2a) for moving a first flexible line portion (7a) extending between said guide and holding device (5) and said storage and handling device (3, 9), and suitable for enabling vertical and horizontal movement of said flexible line portion (7a) relative to said second support element (6) in order to enable said flexible line (7) to be spooled around and against said winding supports (3c, 9c).

5. A laying ship (1) according to claim 4, **characterized in that** the flexible line storage and handling device is of the type referred to as the "carousel" type (3) and comprising:
a) a winding support having a continuous wall in the form of a tapering or right central cylinder (3c) arranged coaxially about the axis (Z₁Z₁') of said turntable (3a), said cylinder being surmounted by at least one top circular plate (3b) at its top; and
b) a spooler device (2) suitable for spooling said flexible line (7) around and against said central cylinder (3c) in said "carousel" mode, comprising a line traction device (5) suitable for tensioning said first line portion (7a) extending between said traction device (5) and the already-wound or still-wound portion of line, and means suitable for moving said tensioned first flexible line portion (7a) vertically in such a manner as to keep it substantially horizontal while it is being wound or unwound so as to enable the line to be spooled in a plurality of coaxial layers (7₁, 7₂, 7₃) of touching turns and enabling it to be unwound, said flexible line thus being wound or being suitable for being wound in "carousel" mode in a plurality of layers such that the turns (7₁-1 to 7₁-n, 7₂-1 to 7₂-n, 7₃-1 to 7₃-n) of any one layer (7₁, 7₂, 7₃) are helically superposed, the various layers (7₁, 7₂, 7₃) forming juxtaposed coaxial cylindrical columns.

6. A laying ship (1) according to claim 4, **characterized in that** the flexible line storage and handling device is of the type known as the "rotary basket" type (9), comprising:
a) a plurality of winding supports (9c) in the form of inner posts arranged circularly relative to the axis of rotation Z₁Z₁' of said turntable (3a) or a tapering or right central cylinder (3c) arranged on the axis with said turntable, and peripheral retaining elements (9a) extending in the perpendicular direction ZZ' above said deck of the ship, being disposed circularly relative to the central axis of rotation Z₁Z₁' of said turntable on the top face of said turntable; and
b) a spooler device (2) suitable for spooling said flexible line (7) around and against said central cylinder (3c) or said plurality of inner posts (9c) in "rotary basket" mode comprising a line holder and guide device (5), and means suitable for moving the first flexible line portion (7a) in a transverse direction YY' perpendicular to said vertical central axis of rotation Z₁Z₁', the first flexible line portion (7a) extending in an inclined position between said holder and guide device and the already-wound or still-wound line (7), so as to enable the line to be spooled as a plurality of superposed layers (7₁, 7₂, 7₃) of touching turns and so as to enable it to be unwound, the flexible line thus being wound or being suitable for being wound in "rotary basket" type mode as a plurality of superposed layers such that the turns (7₁-1 to 7₁-n, 7₂-1 to 7₂-n, 7₃-1 to 7₃-n) in any one layer are juxtaposed concentrically, lying on a common plane and presenting diameters that increase from the first turn (7₁-1, 7₂-1, 7₃-1) pressed against the winding support(s) (3c, 9c) out to the last turn (7₁-n, 7₂-n, 7₃-n) coming into abutment against said peripheral posts (9a), said line portion (7a) extending between the holder and guide device (5) and the already-wound or still-wound line without being tensioned by said holder and guide device (5), which is held at constant height above the top ends of said winding supports (3c, 9c) and said retaining posts (9a).

7. A laying ship (1) according to any one of claims 4 to 6, **characterized in that** the flexible line storage and handling device (20) is of the mixed carousel and the rotary basket type suitable for storing and handling at least two flexible lines and comprising:
• a first winding support for a first line (7-1), said first winding support having a continuous wall in the form of a tapering or right central cylinder (3c) arranged coaxially about the axis of said turntable;
• a plurality of second winding supports for winding a second line (7-2), the supports being in the form of inner posts (9c) arranged circularly relative to the central axis of rotation Z₁Z₁' of said turntable at a constant radial distance from said central cylinder;
• peripheral retaining elements in the form of posts (9a) extending in the perpendicular direction ZZ' above said plane of said ship deck, arranged circularly relative to the central axis of rotation Z₁Z₁' of said turntable;
• said central cylinder being surmounted by a top circular plate (3b) at its top and of diameter such that said inner winding posts of the second line are secured to one another at their tops by being fastened to the periphery of said top plate (3b), said first and second support elements and said retaining elements being arranged on the top face of said turntable;
• a spooler device (2) including at least a second support element (6) for supporting at least one flexible line guide and holder device (5) suitable for enabling a said first flexible line portion (7a) to be moved vertically and horizontally, the first flexible line portion (7a) extending between the guide and holder device (5) and the already-wound or still-wound line for spooling said flexible line (7) around and against said winding supports (3c, 9c), said second support element (6) forming a tower or a gantry (6) extending at least in a direction ZZ' perpendicular to the plane of said and above said bridge, in the proximity (1b) of said turntable;
• a said flexible guide and holder device (5) being suitable for enabling a first flexible line (7-1) to be spooled around and against said central cylinder (3) in "carousel" mode and comprising a line traction device (5) suitable for tensioning the first line portion (7a) extending between the traction device and the already-wound or still-wound first line, said traction device (5) being a caterpuller, and means suitable for vertically moving said first flexible line portion (7a) extending between the traction device and the already-wound or still-wound first line so that it can be tensioned and held substantially horizontally by said traction device (5) to enable the first line to be spooled as a plurality of coaxial layers (7₁, 7₂, 7₃) of superposed touching turns, said first flexible line thus being wound or being suitable for being wound as a plurality of coaxial layers such that the turns in any one layer (7₁-1 to 7₁-n, 7₂-1 to 7₂-n, 7₃-1 to 7₃-n) are superposed helically, the various layers forming juxtaposed coaxial cylindrical columns such that two turns (7₁-i to 7₂-i) of two juxtaposed layers (7₁-7₂) present different diameters; and
• a said flexible line guide and holder device (5) also being suitable for enabling a second flexible line (7-2) to be spooled around and against said winding supports in the form of inner posts (9c) in "rotary basket" type mode, comprising a traction device (5) for applying traction to the line, constituted by a caterpuller, and means suitable for moving said portion (7a) of the second flexible line in horizontal translation in a transverse direction YY' perpendicular to said central axis of rotation Z₁Z₁', said first portion (7a) of the second flexible line extending in an inclined position between the holder and guide device and the already-wound or still-wound second line in order to enable said second line to be spooled as a plurality of superposed layers (7₁, 7₂, 7₃) of touching turns, said second flexible line thus being wound or being suitable for being wound as a plurality of superposed layers such that the turns in any one layer (7₁-1 to 7₁-n, 7₂-1 to 7₂-n, 7₃-1 to 7₃-n) are concentrically juxtaposed, resting on a common plane and having diameters that increase from the first turn (7₁-1, 7₂-1, 7₃-1) pressed against said winding supports in the form of inner posts (9c) to the last turn (7₁-n, 7₂-n, 7₃-n) coming into abutment against said peripheral retaining posts (9a), said first portion (7a) of the second line not being tensioned by said holder and guide device (5), which is held at a constant height above said winding supports (3c, 9c) and said retaining posts (9a).

8. A laying ship (1) according to claim 7, **characterized in that** it has a single line guide and holder device (5) suitable for being moved vertically or horizontally at constant height to move relative to a second support element (6) of said flexible line guide and holder device (5), said second support element comprising a gantry (6).

9. A laying ship (1) according to claim 7 or claim 8, **characterized in that** two flexible lines are wound on a mixed storage and handling device comprising:
• a said first line (7-1) of smaller diameter wound on a said central cylinder in carousel mode; and
• a flexible second line (7-2) of greater diameter wound in rotary basket mode around said inner posts (9c).

10. A ship according to any one of claims 7 to 9, **characterized in that** said turntable is made up of two concentric portions comprising:
• an inner first turntable in the form of a disk (3a-a) suitable for being driven in rotation; and
• an outer second turntable of annular shape (3a-b) that is concentric with said first turntable and arranged around said first turntable, said second turntable being suitable for being held stationary or for being driven in rotation together with said first turntable when said first turntable is driven in rotation.

11. A laying ship according to one of claims 1 to 10, **characterized in that** the top face of said turntable (3a) is plane and substantially at the same level as the plane of said deck around said turntable.

12. A laying ship according to any one of claims 1 to 10, **characterized in that** the top face of said turntable is conical in shape, centered on the middle longitudinal axis XX' of the ship, presenting a half-angle at the apex α greater than 95 grad, of half-angle at the apex α of value substantially identical to the angle of inclination relative to the vertical of said two plane portions P₁, P₂ of the deck of the ship, respectively sloping at a small angle β relative to the horizontal to starboard P₂ and to port P₁ from a central ridge arranged said middle axial longitudinal direction XX' of the ship.

13. A laying ship (1) for laying line at sea according to any one of claims 1 to 12, said ship being **characterized in that** it further includes a J-lay tower (12) and at least one said flexible line (7, 7') wound around a said storage and handling device (3, 9, 12) including a holder and guide device for holding and guiding a line portion (7a) extending between said holder and guide device and the wound line, said line including a curved second line portion (7b) of catenary shape that is subjected to the tension solely of its own weight extending between said holder and guide device (5) and a sheave (8) arranged at a greater height on the tower (12), and a third line portion (7c) extending in rectilinear manner within the tower being tensioned with the help of a second traction device (2b) secured to said J-lay tower (12).

14. A ship according to any one of claims 1 to 13, **characterized in that** said flexible line is an undersea flexible line (1).

15. A method of laying a flexible line (7, 7-1, 7-2) at sea from a ship (1) according to claim 13 or claim 14, the method being **characterized in that** the following steps are performed:
1) moving the ship in a manner that is synchronized with the running of the line through said second traction device within the J-lay tower (12); and
2) unwinding said line by actuating in synchronized manner rotation of said turntable, and moving said first line portion (7a) that extends between said holder and guide device (5) and the wound line in such a manner as to maintain the curvature of said line portion (7b) extending between said holder and guide device (5) and said sheave (8) arranged at a greater height on the tower (2), with a catenary curve of curvature that is at all points greater than the minimum curvature that is acceptable for the flexible line, and preferably in such a manner that said catenary line portion does not touch the deck (1a) of the ship.

16. A method according to claim 15, **characterized in that** a said flexible line wound in carousel mode is unwound by exerting substantially constant tension on said first line portion (7a) extending substantially horizontally between the line holder and guide device and the line wound on a said central cylinder.

17. A method according to claim 15, **characterized in that** a said flexible line wound in rotary basket mode is unwound without exerting tension on said first line portion (7a) extending in an inclined position between the line holder and guide device and the wound line, by synchronizing the travel speed of the line with the speed of rotation of said turntable.

18. A method according to any one of claims 15 to 17, **characterized in that** a storage and handling device of mixed type is used with:
• a said first line (7-1) of smaller diameter wound on a said central cylinder in carousel mode; and
• a flexible second line (7-2) wound in rotary basket mode on said inner posts (9c) and retained by said peripheral retaining posts (9a),
said method being **characterized in that** the following steps are performed in succession:
1) unwinding and laying said second line (7-2) at sea; then
2) removing said inner posts (9c) and said peripheral retaining posts (9a); and
3) unwinding and laying said first line at sea.
